# EUROPEAN PATENT SPECIFICATION

(11) **EP 2 484 443 B1**
(45) Date of publication and mention of the grant of the patent: **03.05.2017**
(21) Application number: 10820826.5
(22) Date of filing: 29.09.2010
(51) Int. Cl.: B01J 31/12, C07F 17/00, B01J 37/02, C08F 4/64, C08F 4/659, C08F 10/00

(54) **SUPPORTED HYBRID METALLOCENE CATALYST COMPRISING THREE COMPOUNDS, AND METHOD FOR PREPARING SAME**
GETRÄGERTER HYBRID-METALLOCEN-KATALYSATOR MIT DREI VERBINDUNGEN SOWIE HERSTELLUNGSVERFAHREN DAFÜR
CATALYSEUR MÉTALLOCÈNE HYBRIDE SUR SUPPORT COMPRENANT TROIS COMPOSÉS, ET PROCÉDÉ D'ÉLABORATION DE CELUI-CI

(30) Priority: 29.09.2009 KR 20090092578
(43) Date of publication of application: 08.08.2012
(73) Proprietor: LG Chem, Ltd., Youngdungpo-gu Seoul 150-721 (KR)
(72) Inventor: SONG, Eun-Kyoung, Daejeon 302-781 (KR); JEON, Man-Seong, Daejeon 305-721 (KR); CHO, Joon-Hee, Daejeon 302-589 (KR); LEE, Ki-Soo, Daejeon 305-744 (KR); HONG, Dae-Sik, Gunpo-si Gyeonggi-do 435-055 (KR)
(74) Representative: Goddar, Heinz J.
(86) International application number: PCT/KR2010/006627
(87) International publication number: WO 2011/040753

(56) References cited:
- EP-A1- 2 050 771
- WO-A1-2008/101691
- WO-A2-02/46250
- JP-A- 2000 063 415
- JP-A- 2007 297 453
- KR-A- 20040 085 650
- KR-B1- 100 753 477

## Description

### FIELD OF THE INVENTION

The present invention relates to a novel hybrid supported metallocene catalyst including 3 or more kinds of catalyst precursors and a carrier for the catalyst precursor, a method for preparing the same, and an olefin polymer using the same.

### BACKGROUND OF THE INVENTION

Since a Zeigler-Natta catalyst that is widely applied to the existing commercial process is a multi-active site catalyst, when olefin polymerization is conducted using the same, the molecular weight distribution of the produced polymer is broad, and it is difficult to polymerize an olefin with desired properties because the composition distribution of the polymerized comonomers is not uniform.

Meanwhile, a metallocene catalyst is a single active site catalyst having one kind of active site, and it may drastically control molecular weight, stereoregularity, and crystallinity of the produced polymer, particularly reactivity of comonomers according to the structure of the catalyst and ligand. However, polyethylene that is polymerized with a metal catalyst has a narrow molecular weight distribution, and thus, when applied to some products, productivity is remarkably lowered due to an extrusion load and the like.

To overcome these technical problems, studies are focused on the development of a catalyst or process that may control the molecular weight distribution of a polyolefin during polymerization.

Specifically, U.S. Patent No. 4,461,873 and No. 7,250,473 describe physically mixing polyolefins having different molecular weights and comonomer contents to control molecular weight distribution. Further, German Patent No. 28,856,548 and U.S. Patent No. 7,345,113 and the like describe controlling molecular weight distribution by changing polymerization conditions according to each reactor when using a two or more stage reactor. However, in the case of physical mixing, the additional production cost is high, and a large quantity of gel is included due to compatibility problems of two polymers, thus deteriorating properties. In the latter case, the process is complicated, there is a limit in broadening the molecular weight distribution due to a limitation in hydrogen reactivity of the catalyst, and polymerization conditions are specific.

EP 2 050 771 A1 discloses a film including, in at least a part thereof, a layer comprising an ethylene-based resin, which is a copolymer of ethylene and an olefin of 4 to 10 carbon atoms which satisfies specific requirements as to melt flow rate, density, ratio of a melt tension to shear viscosity and angular velocity.

To overcome the problems of the prior art, the inventors repeated studies on a supported catalyst that has high catalyst activity and may easily control molecular weight distribution during polymerization of a polyolefin polymer, and completed the invention.

### DETAILED DESCRIPTION OF THE INVENTION

### TECHNICAL OBJECTIVES

It is an object of the present invention to provide a hybrid supported metallocene catalyst that may easily control molecular weight distribution of low molecular weight and high molecular weight parts during preparation of a polyolefin, and that has improved catalyst activity and kneadability, and a method for preparing the same.

It is another object of the present invention to provide an olefin polymer with controlled molecular weight distribution, using the metallocene catalyst.

### TECHNICAL SOLUTION

The above object is achieved in accordance with the independent claims. Preferred embodiments result from the sub-claims.

To achieve the objects, one embodiment of the invention provides a hybrid supported metallocene catalyst including a catalyst precursor including a phenoxyimine-based metal compound and two different kinds of metallocene compounds, and a carrier for the catalyst precursor.

Another embodiment of the invention provides a method for preparing a hybrid supported metallocene catalyst including: contacting a co-catalyst with a carrier; supporting a phenoxyimine-based metal compound on the carrier; supporting a first metallocene compound on the carrier; and supporting a second metallocene compound on the carrier.

Further described herein is an olefin polymer prepared using the hybrid supported metallocene catalyst.

Hereinafter, the present invention will be explained in detail.

According to one embodiment of the invention, there is provided a hybrid supported metallocene catalyst including a catalyst precursor including a phenoxyimine-based metal compound represented by the following Chemical Formula 1, a first metallocene compound represented by the following Chemical Formula 2, and a second metallocene compound represented by the following Chemical Formula 3, and a carrier for supporting the catalyst precursor.

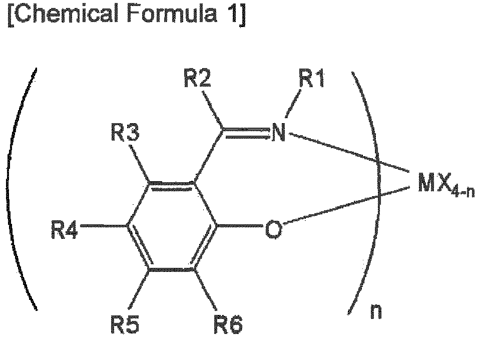

In Chemical Formula 1,
M is Group IV transition metal;
R1, R2, R3, R4, R5, and R6 are independently or simultaneously a hydrogen atom, a halogen group, a C1-20 alkyl group, a C3-20 cycloalkyl group, a C1-20 alkylsilyl group, a C1-20 alkoxy group, a C6-40 aryl group, a C7-40 arylalkyl group, a C7-40 alkylaryl group, a C6-40 arylsilyl group, a C7-40 arylalkylsilyl group, a C6-40 haloaryl group, or a C6-40 aryloxy group;
X is independently or simultaneously a hydrogen atom, a halogen group, a hydroxyl group, a C1-20 alkyl group, a C3-20 cycloalkyl group, a C1-20 alkylsilyl group, a C2-20 alkenyl group, a C1-20 alkoxy group, a C2-20 alkenyloxy group, a C1-20 thioalkoxy group, an amide group, an alcohol amine group, a carboxyl group, a sulfonyl group, a C6-40 aryl group, a C7-40 alkylaryl group, a C7-40 arylalkyl group, a C6-40 arylsilyl group, a C6-40 haloaryl group, a C6-40 aryloxy group, a C7-40 arylalkoxy group, a C6-40 thioaryl group, a C6-40 arylamide group, or a C7-40 arylalkylamide group; and n is an integer of from 1 to 3.

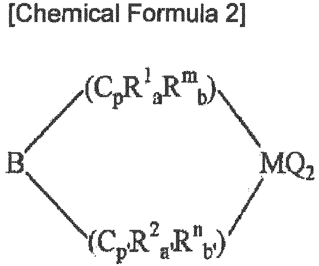

In Chemical Formula 2,
Cp and Cp' are the same or different, and are independently selected from the group consisting of a cyclopentadienyl, a indenyl, 4,5,6,7-tetrahydro-1-indenyl, and a fluorenyl radical;
R^{m} and Rⁿ are the same or different, and are independently a hydrogen radical, or a C1-20 alkyl, cycloalkyl, aryl, alkenyl, alkylaryl, arylalkyl, arylalkenyl, or alkylsilyl radical;
R¹ and R² are the same or different, and are independently hydrogen or a C1-6 hydrocarbyl radical;
a, a', b, and b' are the same or different, and are independently an integer of from 1 to 4;
R¹ and R^{m}, or R² and Rⁿ, may be linked to each other to form an aliphatic ring or an aromatic ring;
M is Group IVB, V5B, or VIB transition metal;
Q is a halogen radical, a C1-20 alkyl radical, an alkenyl radical, an aryl radical, an alkylaryl radical, an arylalkyl radical, or a C1-20 alkylidene radical; and
B is selected from the group consisting of a C1-4 alkylene, a C1-4 alkyl silicone or germanium, a C1-4 alkyl phosphine or amine, a C6-30 arylene group, a C6-30 arylalkylene group, and a C6-30 alkylarylene group.

[Chemical Formula 3] (R^{a})ₚ(R^{b})M'Q₃₋ₚ

In Chemical Formula 3,
p is 0 or 1;
M' is a Group IV transition metal;
R^{a} and R^{b} are the same or different, and are independently a cyclopentadienyl ligand substituted by hydrogen, a C1-20 alkyl, a C2-20 alkoxyalkyl, a C3-20 cycloalkyl, a C6-40 aryl, a C2-20 alkenyl, a C7-40 alkylaryl, a C7-40 arylalkyl, a C8-40 arylalkenyl, and a C1-20 hydrocarbyl; and
Q is a halogen radical.

The hybrid supported metallocene catalyst may further include a supported co-catalyst.

Meanwhile, the inventors found that if an olefin polymer is prepared using the hybrid supported metallocene catalyst according to the above embodiment, the low molecular weight part and high molecular weight part of the polyolefin may be simultaneously controlled during the polymerization process, and catalyst activity and kneadability may be improved, and completed the invention. Namely, the inventors found that if the hybrid supported metallocene catalyst according to the above embodiment is used, dual molecular weight distribution, which is exhibited when a polyolefin is prepared using a conventional hybrid supported metallocene catalyst, may be improved, thus improving processibility of the polyolefin polymer, and completed the invention.

The low molecular weight part of a polyolefin may be defined as a molecular weight range of 1000 ∼ 100,000, and the high molecular weight part may be defined as a molecular weight range of 10,000∼1,000,000.

According to a method for preparing the hybrid supported metallocene catalyst, the hybrid supported metallocene catalyst may be prepared in one reactor.

In Chemical Formula 1, the M may be preferably selected from the group consisting of titanium, zirconium, and hafnium, and the X may preferably be a halogen group. If a hybrid supported metallocene catalyst including a phenoxyimine-based metal compound wherein M in Chemical Formula 1 is selected from the group consisting of titanium, zirconium, and hafnium, and/or a phenoxyimine-based metal compound wherein X in Chemical Formula 1 is a halogen group is used for a polyolefin polymer, control of the low molecular weight part of the polyolefin polymer may be easier.

Meanwhile, the phenoxyimine-based metal compound represented by Chemical Formula 1 may be easily prepared by the reaction of a phenoxyimine ligand and a transition metal halogen compound of the same equivalent, and the ligand may be obtained with a high yield by imination of a corresponding phenoxyaldehyde (or salicylaldehyde) and a primary amine.

Examples of the compound represented by Chemical Formula 1 may include a compound represented by the following structural formula, but are not limited thereto.

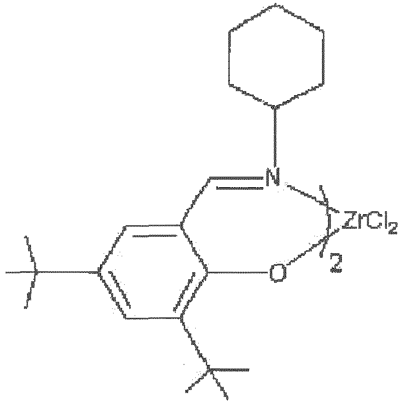

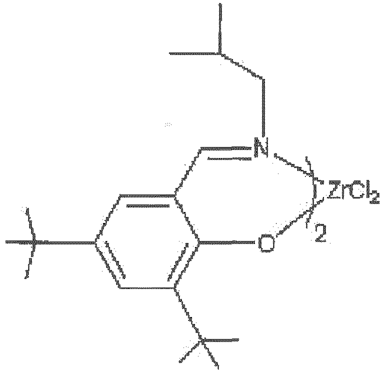

The supported amount of the phenoxyimine-based metal compound represented by Chemical Formula 1 may preferably be 0.05 wt% to 15 wt%, more preferably 0.1 wt% to 10 wt%, and most preferably 1 wt% to 5 wt%, based on 1 g of the carrier. If the polyolefin is polymerized using a supported catalyst including 0.05 to 15 wt% of the phenoxyimine-based metal compound per 1 g of the carrier, the low molecular weight part of the polymer may be more easily controlled during polymerization.

Meanwhile, in Chemical Formula 2, a hydrogen radical in R^{m}, Rⁿ, or B of Chemical Formula 2 may be substituted by the following Chemical Formula 2-1, Chemical Formula 2-2, or Chemical Formula 2-3:

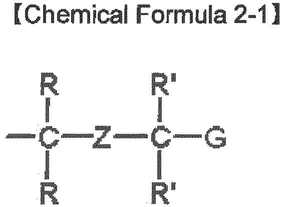

In Chemical Formula 2-1,
Z is an oxygen atom or a sulfur atom;
R and R' are the same or different, and are independently a hydrogen radical, or a C1-20 alkyl, cycloalkyl, aryl, alkenyl, alkylaryl, arylalky, or arylalkenyl radical, and two of R' may be linked to each other to form a ring;
G is a C1-20 alkoxy, aryloxy, alkylthio, arylthio, phenyl, or substituted phenyl, and may be linked with R' to form a ring;
if Z is a sulfur atom, G is necessarily an alkoxy or aryloxy; and
if G is an alkylthio, arylthio, phenyl, or substituted phenyl, Z is necessarily an oxygen atom.

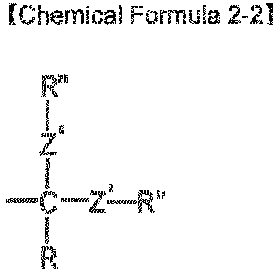

In Chemical Formula 2-2,
Z' is an oxygen atom or a sulfur atom, and at least one of two of Z' is an oxygen atom;
R and R" are the same or different, and are independently a hydrogen radical, or a C1-20 alkyl, cycloalkyl, aryl, alkenyl, alkylaryl, arylalkyl, or arylalkenyl radical; and
R and R" or two of R" may be linked each other to form a ring.

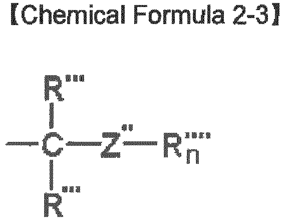

In Chemical Formula 2-3,
Z" is an oxygen, sulfur, nitrogen, phosphorus, or arsenic atom;
R'" are the same or different, and are independently a hydrogen radical, or a C1-40 alkyl, cycloalkyl, aryl, alkenyl, alkylaryl, arylalkyl, or arylalkenyl radical;
R"" is a hydrogen radical, or a C1-40 alkyl, aryl, alkenyl, alkylaryl, alkylsilyl, arylsilyl, phenyl, or substituted phenyl; and
n is 1 or 2, and if Z" is oxygen or sulfur, n is 1, while if Z" is nitrogen, phosphorus, or arsenic, n is 2.

The hybrid supported metallocene catalyst including a metallocene compound wherein a hydrogen radical in R^{m}, Rⁿ, and B of Chemical Formula 2 is substituted by Chemical Formula 2-1, Chemical Formula 2-2, or Chemical Formula 2-3 may optimally control molecular weight of the high molecular weight part of the polymer.

Examples of the compound represented by the Chemical Formula 2 may include [A-O-(CH₂)q-C₅H₄]C(CH₃)₂[C₁₃H₈]ZrCl₂, [A-O-(CH₂)q-C₅H₄]Si(CH₃)₂[C₁₃H₆]ZrCl₂, [C₅H₅]C(CH₃)(A-O-(CH₂)q)[C₁₃H₈]ZrCl₂, or [C₅H₅]Si(CH₃)(A-O-(CH₂)q)[C₁₃H₈]ZrCl₂.

In the examples of the compound represented by the Chemical Formula 2, q is an integer of 4∼8, and A is selected from the group consisting of methoxymethyl, t-butoxymethyl, tetrahydropyranyl, tetrahydrofuranyl, 1-ethoxyethyl, 1-methyl-a-methoxyethyl, and t-butyl. The hybrid supported metallocene catalyst including a controlled amount of the supported first metallocene compound may easily control molecular weight of the high molecular weight part during polymerization, and thus it may control the properties of the polymerized polymer as desired.

Specific examples may include a compound represented by the following structural formula, but are not limited thereto.

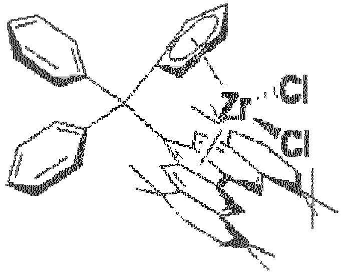

The supported amount of the first metallocene compound represented by Chemical Formula 2 may be preferably 0.05 wt% to 15 wt%, more preferably 0.1 wt% to 10 wt%, and most preferably 1 wt% to 8 wt%, based on 1 g of the carrier. If the hybrid supported metallocene catalyst wherein 0.05 wt% to 15 wt% of the first metallocene compound represented by Chemical Formula 2 is supported on 1 g of the carrier is used for polymerization of a polyolefin polymer, the molecular weight of the high molecular weight part of the polyolefin polymer may be optimally controlled.

Meanwhile, to optimize the effect of improving activity of the hybrid supported metallocene catalyst and kneadability of the catalyst, it is preferable that in Chemical Formula 3, M' is selected from the group consisting of titanium, zirconium, and hafnium, and Q is selected from the group consisting of F, Cl, Br, and I.

Examples of the compound represented by the Chemical Formula 3 may include a compound of the following structural formula, but are not limited thereto.

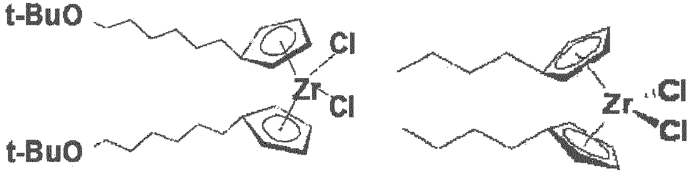

The supported amount of the second metallocene compound may be preferably 0.02 wt% to 15 wt%, more preferably 0.05 wt% to 10 wt%, and most preferably 0.07 wt% to 5 wt% based on 1 g of the carrier. If 0.02 wt% to 15 wt% of the second metallocene compound is used per 1 g of the carrier, the activity of the hybrid supported metallocene catalyst and kneadability of the catalyst may be improved.

According to another embodiment of the invention, the hybrid supported metallocene catalyst may further include a co-catalyst, and the co-catalyst may include a compound represented by the following Chemical Formula 4. As the co-catalyst is used, it may activate a catalyst to prepare a high activity metallocene catalyst, it may function to remove impurities such as moisture, and the catalyst which is applied after contacting a co-catalyst with a carrier may be easily and strongly attached to the carrier.

[Chemical Formula 4] -[Al(R¹⁰)-O]ₐ-

In Chemical Formula 4, R¹⁰ may be the same or different, and are independently a halogen, or a C1-20 hydrocarbyl unsubstituted or substituted by a halogen, and a is an integer of 2 or more.

Examples of the co-catalyst represented by the Chemical Formula 4 may include methylaluminoxane (MAO), ethylaluminoxane, isobutylaluminoxane, butylaluminoxane.

The supported amount of the co-catalyst may preferably be 1 to 10,000 moles, more preferably 10 to 1000 moles, and most preferably 50 to 300 moles per 1 mole of the metal included in the metallocene compound, based on the metal included in the co-catalyst. It may be advantageous in terms of removal of impurities of the carrier and increase in supported catalyst activity for 1 to 10,000 moles of the co-catalyst to be supported per 1 mole of the metal included in the metallocene compound, based on the metal included in the co-catalyst.

The carrier preferably has an appropriate content of hydroxyl groups on the surface. For this, the carrier is dried at a high temperature before use, wherein the drying temperature is 200 to 800 °C, preferably 300 to 600 °C, and more preferably 300 to 450 °C. If the drying temperature is less than 200 °C, too much moisture may exist and thus moisture on the surface may react with the co-catalyst, and if it is greater than 800 °C, hydroxyl groups may disappear on the surface and only siloxane groups may remain and thus reaction sites with the co-catalyst may decrease.

The amount of the hydroxyl groups on the surface is preferably 0.1 to 10 mmol/g, and more preferably 0.5 to 1 mmol/g, and the amount may be controlled by the carrier preparation method and conditions or drying conditions (temperature, time, vacuum, or spray drying). If the amount of the hydroxyl groups is less than 0.1 mmol/g, reaction sites with the co-catalyst may decrease. And if the amount of the hydroxyl groups is greater than 10 mmol/g, it is not preferable because the hydroxyl groups may be come from moisture other than hydroxyl groups on the surface.

Specific examples of the carrier may include at least one selected from silica, silica-alumina, and silica-magnesia, and it may commonly contain an oxide, a carbonate, a sulfate, or a nitrate such as Na₂O, K₂CO₃, BaSO₄, Mg(NO₃)₂.

Further described herein is a polyolefin polymer prepared using the hybrid supported metallocene catalyst. The polyolefin polymer refers to a polymer of olefinic monomers, and specific examples of the olefinic monomers may include ethylene, propylene, butylene, alpha olefin, cyclic olefin, and diene olefinic monomers or triene olefinic monomers having 2 or more double bonds may be polymerized. The examples of the monomers may include ethylene, propylene, 1-butene, 1-pentene, 4-methyl-1-pentene, 1-hexene, 1-heptene, 1-decene, 1-undecene, 1-dodecene, 1-tetradecene, 1-hexadecene, 1-itocene, norbonene, norbornadiene, ethylidenenorbonene, vinylnorbonene, dicylcopentadiene, 1,4-butadiene, 1,5-pentadiene, 1,6-hexadiene, styrene, alpha-methyl styrene, divinyl benzene, 3-chloromethylstyrene, and two or more kinds of the monomers may be mixed and copolymerized.

The polyolefin polymer prepared using the hybrid supported metallocene catalyst may preferably have a molecular weight distribution of 5 to 30, and the molecular weight distribution of the polyethylene polymer may be controlled by controlling the contents of the phenoxyimine based metal compound represented by Chemical Formula 1, the first metallocene compound represented by Chemical Formula 2, and the second metallocene compound represented by Chemical Formula 3.

Further, when the monomers are polymerized in the presence of the hybrid supported metallocene catalyst according to the above embodiments of the invention, the polymerization temperature may be 25 to 500 °C, preferably 25 to 200 °C, and more preferably 50 to 150 °C. The polymerization pressure may be 1 to 100 Kgf/cm², preferably 1 to 70 Kgf/cm², and more preferably 5 to 50 Kgf/cm². If the polymerization temperature and pressure do not fall within the above ranges, reactivity may be lowered to decrease yield, or molecular weight may not be controlled due to rapid reaction and thus a polymer with desired properties may not be obtained.

### BRIEF DESCRIPTION OF THE DRAWING

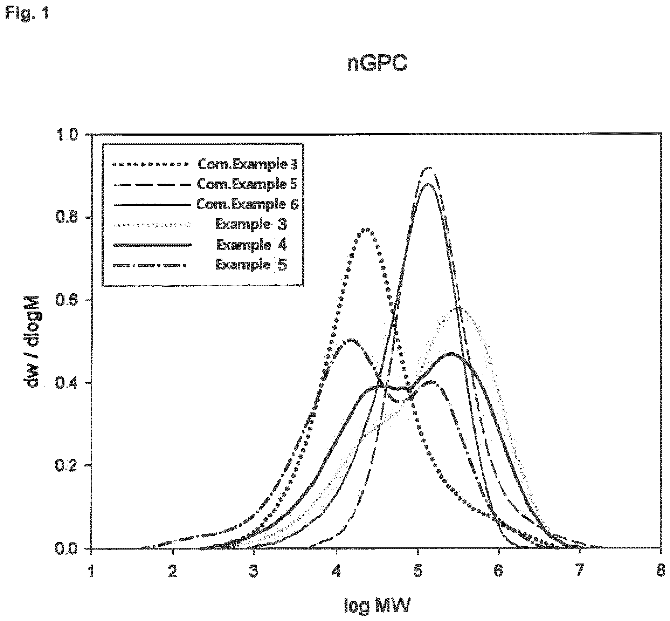

Fig. 1 is a GPC (gel permeation chromatography) graph of a polyolefin polymerized using the hybrid supported catalysts prepared in examples and comparative examples.

### DETAILED DESCRIPTION OF THE INVENTION

Hereinafter, the constitution and the effect of the invention will be explained in detail with reference to the following examples. However, there examples are provided only to aid in understanding of the invention, and the scope of the invention is not limited thereto.

Organic reagents and solvents required in the catalyst preparation and polymerization were purchased from the Aldrich Company and purified by a standard method, and for ethylene, a high purity product from Applied Gas Technology Inc. was passed through moisture and oxygen filtering equipment. During all steps of catalyst synthesis, supporting, and olefin polymerization, contact with air and moisture was blocked to increase reproducibility of the experiment.

To prove the structure of a catalyst, a spectrum was obtained using a 300 MHz NMR (Bruker). Apparent density was measured by the method as set forth in DIN 53466 and ISO R 60 using an apparent density tester (APT Institute fr Prftechnik).

### <Preparation Example 1> Preparation of a second metallocene compound

### 1. Synthesis of catalyst precursor A(a)

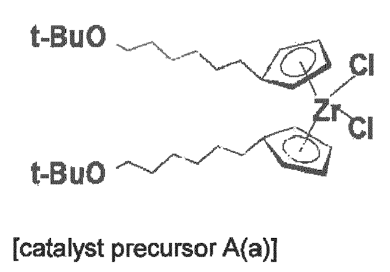

t-Butyl-O-(CH₂)₆-Cl was prepared using 6-chlorohexanol by the method described in the literature (Tetrahedron Lett. 2951 (1988)), and it was reacted with NaCp to obtain t-butyl-O-(CH₂)₆-C₅H₅ (yield 60 %, b.p. 80 °C / 0.1 mmHg).

Further, t-butyl-O-(CH₂)₆-C₅H₅ was dissolved in THF at -78 °C, n-BuLi was slowly added thereto, the temperature was raised to room temperature, and they were reacted for 8 hours. Already synthesized lithium salt solution was added to a suspension solution of ZrCl₄(THF)₂ (1.70 g, 4.50 mmol)/THF (30ml) at -78 °C, and the above reaction solution was reacted therewith at room temperature for an additional 6 hours.

All the volatile materials were vacuum dried, and a hexane solvent was added to the obtained oily liquid material to filter. The filtered solution was vacuum dried, and then hexane was added to induce precipitation at a low temperature (-20 °C). The obtained precipitate was filtered at a low temperature to obtain a white solid compound [^{t}Bu-O-(CH₂)₆-C₅H₄]₂ZrCl₂ (yield 92 %).

¹H NMR (300 MHz, CDCl₃): 6.28 (t, J = 2.6 Hz, 2 H), 6.19 (t, J = 2.6 Hz, 2 H), 3.31 (t, 6.6 Hz, 2 H), 2.62 (t, J = 8 Hz), 1.7 - 1.3 (m, 8 H), 1.17 (s, 9 H).

¹³C NMR (CDCl₃): 135.09, 116.66, 112.28, 72.42, 61.52, 30.66, 30.61, 30.14, 29.18, 27.58, 26.00.

### 2. Synthesis of catalyst precursor A(b)

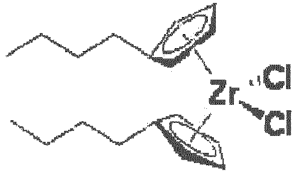

### [Catalyst precursor A(b)]

n-butylchloride and NaCp were reacted to prepare n-BuCp, and it was reacted with ZrCl₄THF to prepare a catalyst B (yield 50 %).

### <Preparation Example 2> Preparation of phenoxyimine-based metal compound

### 1. Synthesis of catalyst precursor B(a)

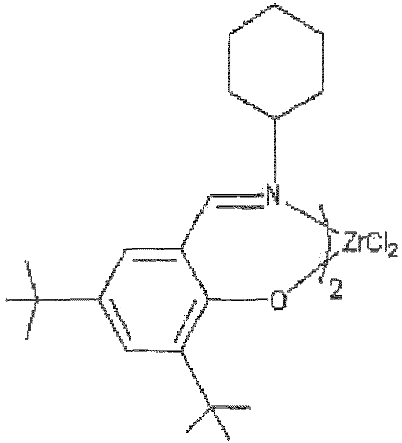

### [Catalyst precursor B(a)]

### A. Synthesis of ligand

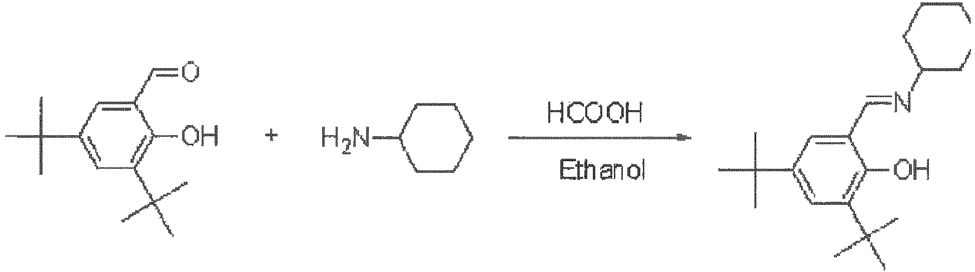

### [Reaction Formula 1] Synthesis of ligand

Into a 2L Schlenk flask, 31 g of 3,5-di-tert-butyl-2-hydroxybenzaldehyde (132 mmol) and 300 ml of ethanol were introduced, and then 17 ml of cyclohexylamine (145 mmol) was slowly introduced using a syringe. Then, 20 drops of formic acid were introduced, and the mixture was agitated at room temperature overnight. The solvent was removed using an evaporator, and dried through a vacuum line to obtain a ligand.

Yield: 100 % (41.6 g, yellow powder)

¹H NMR: 8.40 (s, 1H), 7.39 (s, 1H), 7.10 (s, 1H), 3.23 (t, 1H), 1.9-1.3 (m, 10H), 1.48 (s, 9H), 1.33 (s, 9H)

### B. Metallation of ligand

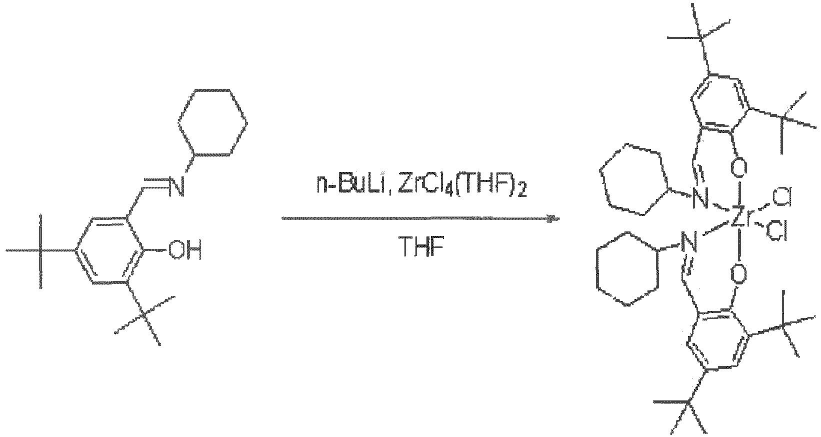

### [Reaction Formula 2] Synthesis of catalyst

The above prepared ligand (132 mmol, 41.6 g) was introduced into a 2 L Schlenk flask, and THF (244 ml) was added thereto under an Ar atmosphere. The solution was cooled to -78 °C using a dry ice/acetone bath, and a 15.1 wt% n-BuLi hexane solution (139 mmol, 85 ml) was slowly added. The reaction mixture was then agitated for 3 hours, and allowed to stand so that the temperature became room temperature. Then, ZrCl₄(THF)₂ (66 mmol, 25 g) was introduced into a 2L Schlenk flask, and THF (400ml) was added. The solution was cooled to -78 °C through a dry ice/acetone bath, and then a ligand lithium salt solution was introduced into the Zr solution using a cannula. The reaction mixture was agitated overnight, and the solvent was removed using a vacuum line. MC (480 ml) was added thereto, and the mixture was agitated for 15 minutes, vacuum filtered in a fritted filter funnel having Celite using a cannula, and washed with MC (30 ml). The filtrate was removed using a vacuum line, and 200 ml of hexane was introduced. The reaction mixture was vacuum filtered using a fritted filter, and then washed with 10 ml of cooled hexane. Finally, remaining solid in the fritted filter was dried using a vacuum line to obtain a catalyst.

Yield: 55 % (29 g, yellow powder)

¹H NMR: 8.21 (s, 1H), 7.63 (s, 1H), 7.13 (s, 1H), 3.83 (t, 1H), 2.2-0.8 (m, 10H), 1.61 (s, 9H), 1.32 (s, 9H)

### 2. Synthesis of catalyst precursor B(b)

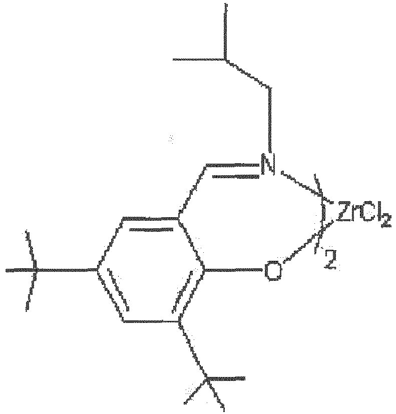

### [catalyst precursor B(b)]

### A. Synthesis of ligand

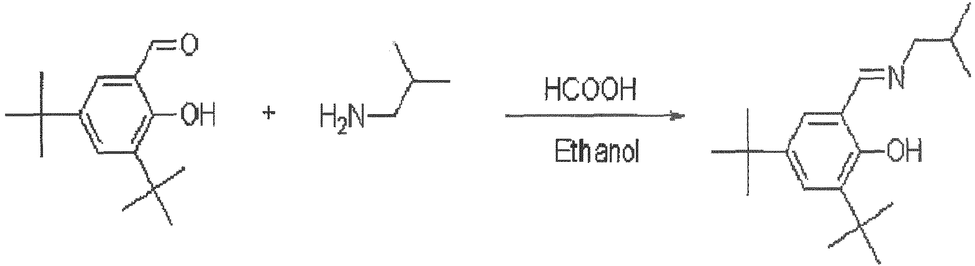

### [Reaction Formula 3] Synthesis of ligand

24 g of 3,5-di-tert-butyl-2-hydroxybenzaldehyde (102 mmol) and 240 ml of ethanol were introduced into a 1 L Schlenk flask, and then 11 ml of isobutylamine (112 mmol) was slowly added thereto using a syringe. Then, 24 drops of formic acid were introduced, and agitated at room temperature overnight. The solvent was removed using an evaporator, and the resultant was dried through a vacuum line to obtain a ligand.

Yield: 100 % (29.5 g, yellow powder)

¹H NMR: 8.33 (s, 1H), 7.39 (s, 1H), 7.10 (s, 1H), 3.42 (d, 2H), 2.00 (h, 1H), 1.47 (s, 9H), 1.33 (s, 9H), 1.00 (d, 6H)

### B. Metallation of ligand

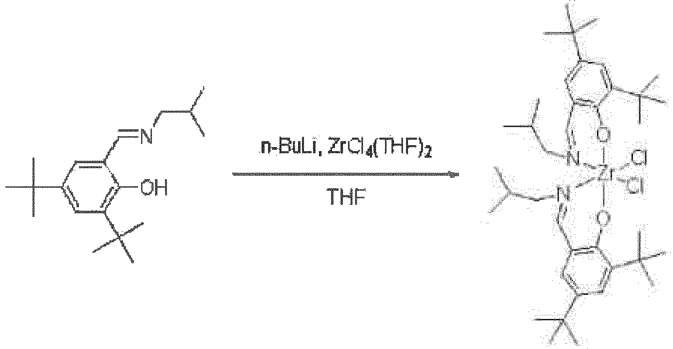

### [Reaction Formula 4] Synthesis of catalyst

The above prepared ligand (146mmol, 42g) was introduced into a 2 L Schlenk flask, and THF (260 ml) was added under an Ar atmosphere. The solution was cooled to -78 °C using a dry ice/acetone bath, and a 15.1 wt% n-BuLi hexane solution (152 mmol, 93 ml) was slowly added. The reaction mixture was then agitated for 3 hours, and allowed to stand so that the temperature became room temperature. Then, ZrCl₄(THF)₂ (72.5 mmol, 27.4 g) was introduced into a 2L Schlenk flask in a glove box, and THF (260ml) was added. The solution was cooled to -78 °C through a dry ice/acetone bath, and then a ligand lithium salt solution was introduced into the Zr solution using a cannula. The reaction solution was agitated overnight, and the solvent was removed using a vacuum line. MC (400 ml) was added thereto, and the mixture was agitated for 15 minutes, vacuum filtered in a fritted filter funnel having Celite using a cannula, and washed with MC (30 ml). The filtrate was removed using a vacuum line, and 120 ml of hexane was added. The mixture was vacuum filtered using a fritted filter, and then washed with 10 ml of cooled hexane. Finally, remaining solid in the fritted filter was dried using a vacuum line to obtain a catalyst.

Yield: 26 % (14 g, yellow powder)

¹H NMR: 8.06 (s, 1H), 7.62 (s, 1H), 7.15 (s, 1H), 3.45 (dd, 1H), 3.05 (dd, 1H), 1.99 (h, 1H), 1.58 (s, 9H), 1.34 (s, 9H), 0.70 (d, 3H), 0.66 (d, 3H)

### <Preparation Example 3> Preparation of a first metallocene compound (catalyst precursor C)

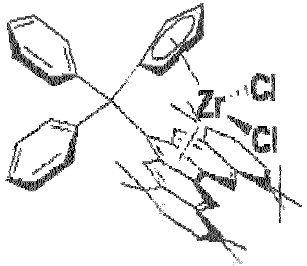

### [Catalyst precursor C]

### A. Synthesis of 2,5-dichloro-2,5-dimethylhexane

200 g of 2,5-dimethyl-2,5-hexanediol and 1.00L of hydrochloric acid were introduced into a dried 2L flask, and the white slurry was agitated for 17 hours. The white solid was filtered and washed with 500 mL of water. The solid part was dissolved in 1.00 L of diethylether, and moisture was removed with MgSO₄. The solution was passed through a short alumina column, and the solvent was removed with an evaporator to obtain 238.0 g of a white crystalline solid.

Yield: 95.0 %

H NMR (CDCl₃): 1.55 (s, 12H), 1.90 (s, 4H)

C NMR (CDCl₃): 32.59 (CH₃), 41.21 (CH₂), 70.13 (CH₀)

### B. Synthesis of 6,6-Diphenylfulvene

Sodium methoxide (41.00 g, 759.0 mmol), ethanol (500 ml), and benzophenone (125.00 g, 686.0 mmol) were introduced into a 1 L flask, and the mixture was agitated. Cyclopentadiene (100 ml, 1213 mmol) was added thereto, and after the solution turned red, the reaction mixture was agitated at room temperature for 7 days. The solution was then removed by filtration, and washed with 5 0mL of ethanol to obtain an orange precipitate. The precipitate was boiled with 200 ml of methanol for 1 hour and cooled to obtain a solid, and it was washed with 75 mL of methanol and vacuum dried for 48 hours to obtain 136.2 g of the resultant product (yield: 86.2 %).

### C. Synthesis of octamethyloctahydrodibenzofluorene

36 g (216.6 mmol) of fluorene, 80.00 g (436.9 mmol) of 2,5-dichloro-2,5-dimethyl hexane, and 600 mL of nitromethane were introduced into a dried 2 L flask, and the mixture was agitated. In another flask, 38.50 g (289 mmol) of AlCl₃ was dissolved in 100 mL of nitromethane, and was slowly added to the 2 L flask over 10 minutes. The purple solution was agitated for more than 20 hours, and then slowly dripped in 700 mL of ice water to form a precipitate. The precipitated was filtered and put in 500 mL of ethanol and boiled to dissolve impurities, and then cooled to filter crystals. The same operation was repeated with 300 mL of hexane, and the mixture was filtered and vacuum dried to obtain 62.5 g of a white solid (74.7 %).

¹H NMR (Cl₂DCCDCl₂): 1.38, 1.43 (s, 24H, CH₃), 1.77 (apparent s, 8H, CH₂), 3.82 (s, 2H, CH₂), 7.49, 7.71 (s, 4H, Flu-H).

¹³C NMR (Cl₂DCCDCl₂): 32.37, 32.53 (CH₃), 34.68, 34.71 (CH₀), 35.50, 35.55 (CH₂), 36.47 (CH₂), 117.48, 123.31(CH), 139.20, 140.80, 143.50, 143.66 (CH₀).

### D. Synthesis of Ph₂C(C₅H₄)(C₂₉H₃₆)H₂ (ligand)

12.00 g (31.04 mmol) of octamethyloctahydrodibenzofluorene was introduced into a 300 mL flask and vacuum dried, and then 120 mL of diethylether was added thereto. The mixture was cooled to 0 °C, and 21.0 mL (33.6 mmol) of a 1.6 M n-butyl lithium solution in hexane was slowly introduced using a syringe to confirm a yellow precipitate. The mixture was agitated for 21 hours, the solvent was removed under vacuum, 7.148 g (31.04 mmol) of already synthesized 6,6-diphenylfulvene and 150L of diethylether were introduced, and the mixture was agitated at room temperature for 5 days. The reaction was completed with 60 mL of a NH₄Cl aqueous solution and the organic layer was separated to remove the solvent, thus obtaining 19.15 g of a non-purified white solid, which was recrystallized with ethanol to purify it.

¹H NMR (Cl₂DCCDCl₂, 100°C): 1.02, 1.22, 1.33, 1.36 (s, 24H, CH₃), 1.71 (m, 8H, CH₂), 3.00 (s, 2H, Cp-CH₂), 5.54 (s, 1H, 9-Oct-H), 6.24, 6.24, 6.28 (m, 3H, Cp-CH₁), 7.11-7.18 (m, 10H, phenyl-H), 7.35, 7.35 (s, 4H, Oct-H).

¹³C NMR (Cl₂DCCDCl₂, 100°C): 32.00, 32.03, 32.12, 32.39 (CH₃), 34.37, 34.50 (CH₀), 35.74, 35.85 (CH₂), 40.85 (Cp-CH₂), 53.16 (9-Oct-CH₁), 60.08 (C(Oct)- (Cp)(Ph)₂), 116.14, 125.40, 125.82 (Cp-CH₁), 127.04, 130.18 (Oct-CH₁), 126.76, 128.84, 130.31, 131.08, 135.93 (phenyl-CH₁), 140.04, 142.34, 142.38, 143.59 (Oct-CH0), other CH₀ not determined

### E. Synthesis of Ph₂C(C₅H₄)(C₂₉H₃₆)ZrCl₂

10.00 g (16.21 mmol) of the synthesized ligand, 3.053 g (32.42 mmol) of LiCH₂Si(CH₃)₃, and 75 mL of diethylether were introduced into a dried 250 mL flask and mixed, and the mixture was cooled to -78 °C in a low temperature water bath and then removed, and 25 mL of THF was introduced thereto. After agitating for 45 hours, 3.78 g (16.2 mmol) of ZrCl₄ was added. The solution was cooled again to -78 °C then removed from the low temperature water bath, and the solution was agitated for 47 hours. The solvent was removed, and the mixture was extracted using 200 mL of diethylether with a Soxhlet extractor. When the volume decreased to 100 mL, a pink solid material was taken out and vacuum dried to obtain 5.03 g of the resultant product (Yield: 39.9 %).

¹H NMR (C₆D₆): 1.01, 1.07, 1.35, 1.51 (s, 24H, Oct-CH₃), 1.61 (m, 8H, Oct-CH₂), 5.68, 6.21 (s, 4H, Cp-H), 6.42, 8.42 (s, 4H, Oct-H), 6.97, 7.08, 7.12 (t, 3JHH) 7.0, 7.3, 8.1 Hz, 6H, phenyl-H), 7.70, 7.74 (d, 3JHH) 7.7, 7.7 Hz, 4H, phenyl-H).

¹³C NMR (CD₂Cl₂): 30.97, 31.75, 32.42, 33.50 (CH₃), 34.56, 34.80, 34.83, 35.05 (CH₀ and CH₂), 57.92 (PhCPh), 74.25, 108.78, 119.78, 121.09, 144.90, 146.12, 146.81 (Cp-, phenyl-, and Oct- CH₀), 102.05, 117.83 (Cp-CH₁), 121.61, 122.18, 126.71, 127.17, 129.01, 129.10, 129.46 (phenyl- and Oct-CH₁).

Anal. Calc'd for C₄₇H₅₀Zr₁Cl₂: C, 72.65; H, 6.49. Found: C, 69.93; H, 6.10

### <Example 1>

A carrier (silica / manufactured by Grace Davison Company, SYLOPOL 948) was dehydrated at 400 °C for 12 hours under vacuum.

100 ml of a toluene solution was introduced into a glass reactor, 10 g of the prepared silica was added, and they were agitated while raising the reactor temperature to 70 °C. After sufficiently dispersing silica, 53.1 ml of a 10 wt% methylaluminoxane (MAO)/toluene solution was added, and the temperature was raised to 80 °C and the reaction mixture was agitated at 200 rpm for 16 hours. The temperature was then lowered to 40 °C, and the reaction mixture was washed with a sufficient amount of toluene to remove undesired aluminum compounds. 100 ml of toluene was added, as was 0.121g of the catalyst precursor A(a) prepared in the Preparation Example 1. After agitating for 1 hour, 0.311 g of the catalyst precursor B(b) prepared in Preparation Example 2 was dissolved in 20 ml of toluene and introduced in a solution state. After agitating for 1 hour again, 0.311 g of the catalyst precursor C was introduced in a toluene solution state in the same manner as B(b), and then reaction progressed for an additional 2 hours. After the reaction was completed, agitation was stopped, a toluene layer was separated and removed, and then remaining toluene was removed by reducing the pressure at 40 °C to prepare a hybrid supported metallocene catalyst.

### <Example 2>

A hybrid supported metallocene catalyst was prepared by the same method as Example 1, except using 0.242 g of the catalyst precursor A(a), 0.622g of the catalyst precursor B(b), and 0.622 g of the catalyst precursor C.

### <Example 3>

A hybrid supported metallocene catalyst was prepared by the same method as Example 1, except using 0.0081 g of the catalyst precursor A(a), 0.2498 g of the catalyst precursor B(b), and 0.4622 g of the catalyst precursor C.

### <Example 4>

A hybrid supported metallocene catalyst was prepared by the same method as Example 3, except using 0.3331 g of the catalyst precursor B(a).

### <Example 5>

A hybrid supported metallocene catalyst was prepared by the same method as Example 3, except using 0.4996 g of the catalyst precursor B(a).

### <Comparative Example 1>

100 ml of a toluene solution was introduced into a glass reactor, 10 g of the prepared silica was added, and then the mixture was agitated while raising the temperature of the reactor to 70 °C. After sufficiently dispersing the silica, 53.1 ml of a 10 wt% methylaluminoxane (MAO)/toluene solution was introduced, the temperature was raised to 80 °C, and the mixture was agitated at 200 rpm for 16 hours. The temperature was then lowered to 40 °C, and the reaction mixture was washed with a sufficient amount of toluene to remove unreacted aluminum compounds. 100 ml of toluene was added, 0.5 g of A(a) prepared in Preparation Example 1 was introduced, and they were reacted for 2 hours. After the reaction was completed, agitation was stopped, a toluene layer was separated and removed, and remaining toluene was removed by reducing the pressure at 40 °C to prepare a catalyst for polyolefin polymerization.

### <Comparative Example 2>

A catalyst for polyolefin polymerization was prepared by the same method as Comparative Example 1, except using 0.5 g of the catalyst precursor A(b) instead of the catalyst precursor A(a) in Comparative Example 1.

### <Comparative Example 3>

A catalyst for polyolefin polymerization was prepared by the same method as Comparative Example 1, except using 0.33 g of the catalyst precursor B(a) instead of the catalyst precursor A(a) in Comparative Example 1.

### <Comparative Example 4>

A catalyst for polyolefin polymerization was prepared by the same method as Comparative Example 1, except using 0.348 g of the catalyst precursor B(b) instead of the catalyst precursor A(a) in Comparative Example 1.

### <Comparative Example 5>

A catalyst for polyolefin polymerization was prepared by the same method as Comparative Example 1, except using 0.5 g of the catalyst precursor C instead of the catalyst precursor A(a) in Comparative Example 1.

### <Comparative Example 6>

A catalyst for polyolefin polymerization was prepared by the same method as Comparative Example 1, except that 0.121 g of the catalyst precursor A(a) was introduced, and after 1 hour, 0.348 g of the catalyst precursor B(b) was introduced (while dissolved in 20 ml of toluene) instead of the catalyst precursor A(a) in Comparative Example 1.

### <Comparative Example 7>

A catalyst for polyolefin polymerization was prepared by the same method as Comparative Example 1, except that 0.278 g of the catalyst precursor B(a) was introduced, and after 1 hour, 0.381 g of the catalyst precursor C was introduced (while dissolved in 20 ml of toluene) instead of the catalyst precursor A(a) in Comparative Example 1.

### < Comparative Example 8>

A catalyst for polyolefin polymerization was prepared by the same method as Comparative Example 1, except that 0.2023 g of the catalyst precursor A(b) was introduced, and after 1 hour, 0.466 g of the catalyst precursor C was introduced (while dissolved in 20 ml of toluene) instead of the catalyst precursor A(a) in Comparative Example 1.

### <Experimental Example> Ethylene polymerization in semi-batch reactor

50 mg of each supported catalyst prepared in Examples 1∼5 and Comparative Examples 1∼8 were quantified in a dry box and put in a glass bottle, and then sealed with a rubber diaphragm and taken out of the dry box to prepare a catalyst to be injected. Polymerization was conducted in a 2 L metal alloy reactor equipped with a stirrer with a temperature control and that is capable of being used under a high pressure.

1 L of hexane including 1.0 mmol triethylaluminum and 1-hexene (20 ml) were injected into the reactor, each prepared supported catalyst was introduced into the reactor without contact with air, and polymerization was progressed for 1 hour while continuously adding ethylene gas monomers at 80 °C under a pressure of 9 Kgf/cm². Agitation was stopped and the ethylene was discharged and removed, thereby completing polymerization.

The obtained polymer was filtered to remove most of the polymerization solvent, and then dried in a vacuum oven at 80 °C for 4 hours.

The ethylene/1-hexene polymerization activity of each prepared catalyst, and molecular weights and molecular weight distributions of the obtained polymers, are described in the following Table 1. To confirm the support effect of the three-component hybrid supported metallocene catalyst, a GPC graph is shown in Fig. 1.

**[Table 1]**

| | Mn | Mw | PDI | Activity (KgPE/g catalyst) |
|---|---|---|---|---|
| Example 1 | 76,489 | 613,923 | 8.03 | 3.6 |
| Example 2 | 41,988 | 670,786 | 15.98 | 4.1 |
| Example 3 | 28,857 | 434,894 | 15.07 | 6.4 |
| Example 4 | 16,756 | 344,481 | 20.56 | 7.1 |
| Example 5 | 4,080 | 120,800 | 29.60 | 7.0 |
| Comparative Example 1 | 71,627 | 157,779 | 2.20 | 7.8 |
| Comparative Example 2 | 66,598 | 162,674 | 2.44 | 8.3 |
| Comparative Example 3 | 11,388 | 101,380 | 8.95 | 2.6 |
| Comparative Example 4 | 7,875 | 140,081 | 17.78 | 2.0 |
| Comparative Example 5 | 82,747 | 298,646 | 3.61 | 0.9 |
| Comparative Example 6 | 40,519 | 161,785 | 3.99 | 3.8 |
| Comparative Example 7 | Not detected | | | <0.1 |
| Comparative Example 8 | 68,679 | 121,179 | 3.37 | 6.8 |

When a polyolefin is synthesized using a supported catalyst including A(a) or A(b) only as a catalyst precursor of the active ingredient, as can be seen from the polymerization experiment results according to Comparative Example 1 and Comparative Example 2, the supported catalyst itself is highly active, but PDI of the polyolefin prepared using the same is narrow.

Further, when a polyolefin is polymerized using the supported catalyst of Comparative Example 4 only including B(b) as a catalyst precursor of the active ingredient, PDI is broad, but the supported catalyst itself is a low molecular weight catalyst having low activity.

Further, as shown in the experimental results of the comparative examples of the above Table 1, the supported catalyst including only two kinds of metallocene compounds or the supported catalyst including one kind of metallocene compound and a phenoxyimine-based compound as a catalyst precursor of the active ingredient could not prepare a polyolefin polymer having a broad PDI distribution while having high activity of the catalyst itself.

Meanwhile, it can be seen that the supported catalyst of Examples 1 to 5 including two kinds of metallocene compounds and a phenoxyimine-based metal compound as a catalyst precursor of the active ingredient exhibit excellent catalyst activity, and that when polyolefin is polymerized using the same, the PDI is broad.

In addition, as can be seen from the polyolefin polymerization results of Examples 1 to 5, the molecular weight distribution may be controlled such as by increasing a low molecular weight area or increasing a high molecular weight area during polymerization of a polyolefin by using a supported catalyst with a controlled content ratio of each catalyst precursor.

## Claims

1. A hybrid supported metallocene catalyst comprising a catalyst precursor comprising a phenoxyimine-based metal compound represented by the following Chemical Formula 1, a first metallocene compound represented by the following Chemical Formula 2, and a second metallocene compound represented by the following Chemical Formula 3; and a carrier for the catalyst precursor: 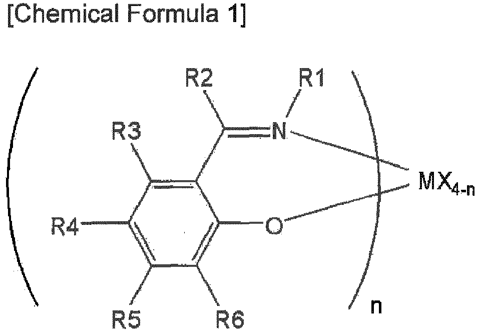 in Chemical Formula 1,
M is Group IV transition metal;
R1, R2, R3, R4, R5, and R6 are independently or simultaneously a hydrogen atom, a halogen group, a C1-20 alkyl group, a C3-20 cycloalkyl group, a C1-20 alkylsilyl group, a C1-20 alkoxy group, a C6-40 aryl group, a C7-40 arylalkyl group, a C7-40 alkylaryl group, a C6-40 arylsilyl group, a C7-40 arylalkylsilyl group, a C6-40 haloaryl group, or a C6-40 aryloxy group;
X is independently or simultaneously, a hydrogen atom, a halogen group, a hydroxyl group, a C1-20 alkyl group, a C3-20 cycloalkyl group, a C1-20 alkylsilyl group, a C2-20 alkenyl group, a C1-20 alkoxy group, a C2-20 alkenyloxy group, a C1-20 thioalkoxy group, an amide group, an alcohol amine group, a carboxyl group, a sulfonyl group, a C6-40 aryl group, a C7-40 alkylaryl group, a C7-40 arylalkyl group, a C6-40 arylsilyl group, a C6-40 haloaryl group, a C6-40 aryloxy group, a C7-40 arylalkoxy group, a C6-40 thioaryl group, a C6-40 arylamide group, or a C7-40 arylalkylamide group; and
n is an integer of from 1 to 3, 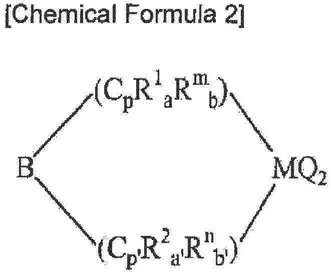
in Chemical Formula 2,
Cp and Cp' are the same or different, and are independently selected from the group consisting of cyclopentadienyl, indenyl, 4,5,6,7-tetrahydro-1-indenyl and fluorenyl radical;
R^{m} and Rⁿ are the same or different, and are independently a hydrogen radical, or a C1-20 alkyl, cycloalkyl, aryl, alkenyl, alkylaryl, arylalkyl, arylalkenyl, or alkylsilyl radical;
R¹ and R² are the same or different, and are independently hydrogen or a C1-6 hydrocarbyl radical;
a, a', b and b' are the same or different, and are independently an integer of from 1 to 4;
R¹ and R^{m}, or R² and Rⁿ, may be linked to each other to form an aliphatic ring or an aromatic ring;
M is Group IVB, V5B, or VIB transition metal;
Q is a halogen radical, a C1-20 alkyl radical, an alkenyl radical, an aryl radical, an alkylaryl radical, an arylalkyl radical, or a C1-20 alkylidene radical; and
B is selected from the group consisting of a C1-4 alkylene, a C1-4 alkyl silicone or germanium; C1-4 alkyl phosphine or amine; a C6-30 arylene group; a C6-30 arylalkylene group; and a C6-30 alkylarylene group,
[Chemical Formula 3] (R^{a})ₚ(R^{b})M'Q₃₋ₚ
in Chemical Formula 3,
p is 0 or 1;
M' is a Group IV transition metal;
R^{a} and R^{b} are the same or different, and are independently a cyclopentadienyl ligand substituted by hydrogen, a C1-20 alkyl, a C2-20 alkoxyalkyl, a C3-20 cycloalkyl, a C6-40 aryl, a C2-20 alkenyl, a C7-40 alkylaryl, a C7-40 arylalkyl, a C8-40 arylalkenyl, and a C1-20 hydrocarbyl; and
Q is a halogen radical.

2. The hybrid supported metallocene catalyst according to claim 1, further comprising a co-catalyst.

3. The hybrid supported metallocene catalyst according to claim 1, wherein in Chemical Formula 1, M is titanium, zirconium, or hafnium, and X is a halogen group.

4. The hybrid supported metallocene catalyst according to claim 1, wherein the supported amount of the phenoxyimine-based metal compound is 0.05 wt% to 15 wt% based on 1 g of the carrier.

5. The hybrid supported metallocene catalyst according to claim 1, wherein a hydrogen radical in R^{m}, Rⁿ, and B of Chemical Formula 2 is substituted by the following Chemical Formula 2-1, Chemical Formula 2-2, or Chemical Formula 2-3: 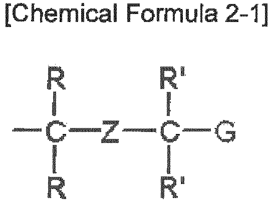 in the Chemical Formula 2-1,
Z is an oxygen atom or a sulfur atom;
R and R' are the same or different, and are independently a hydrogen radical, or a C1-20 alkyl, cycloalkyl, aryl, alkenyl, alkylaryl, arylalky, or arylalkenyl radical, and two of R' may be linked to each other to form a ring;
G is a C1-20 alkoxy, aryloxy, alkylthio, arylthio, phenyl, or substituted phenyl, and may be linked with R' to form a ring;
if Z is a sulfur atom, G is necessarily an alkoxy or aryloxy; and
if G is alkylthio, arylthio, phenyl, or substituted phenyl, Z is necessarily an oxygen atom, 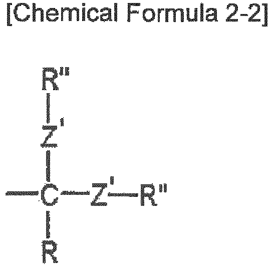
in Chemical Formula 2-2,
Z' is an oxygen atom or a sulfur atom, and at least one of Z' is an oxygen atom;
R and R" are the same or different, and are independently a hydrogen radical, or a C1-20 alkyl, cycloalkyl, aryl, alkenyl, alkylaryl, arylalkyl, or arylalkenyl radical; and
R and R" or two of R" may be linked to each other to form a ring, 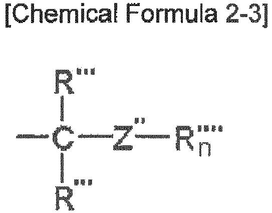
in Chemical Formula 2-3,
Z" is an oxygen, sulfur, nitrogen, phosphorus, or arsenic atom;
R"' are the same or different, and are independently a hydrogen radical, or a C1-40 alkyl, cycloalkyl, aryl, alkenyl, alkylaryl, arylalkyl, or arylalkenyl radical;
R"" is a hydrogen radical, or a C1-40 alkyl, aryl, alkenyl, alkylaryl, alkylsilyl, arylsilyl, phenyl, or substituted phenyl; and
n is 1 or 2, and if Z" is oxygen or sulfur, n is 1, and if Z" is nitrogen, phosphorus, or arsenic, n is 2.

6. The hybrid supported metallocene catalyst according to claim 1, wherein the first metallocene compound represented by Chemical Formula 2 is [A-O-(CH₂)q-C₅H₄]C(CH₃)₂[C₁₃H₈]ZrCl₂, [A-O-(CH₂)q-C₅H₄]Si(CH₃)₂[C₁₃H₈]ZrCl₂, [C₅H₅]C(CH₃)(A-O-(CH₂)q)[C₁₃H₈]ZrCl₂, or [C₅H₅]Si(CH₃)(A-O-(CH₂)q)[C₁₃H₈]ZrCl₂,
provided that q is an integer of 4∼8, and A is selected from the group consisting of methoxymethyl, t-butoxymethyl, tetrahydropyranyl, tetrahydrofuranyl, 1-ethoxyethyl, 1-methyl-a-methoxyethyl, and t-butyl.

7. The hybrid supported metallocene catalyst according to claim 1, wherein the supported amount of the first metallocene compound is 0.05 wt% to 15 wt% based on 1 g of the carrier.

8. The hybrid supported metallocene catalyst according to claim 1, wherein the supported amount of the second metallocene compound is 0.02 wt% to 15 wt% based on 1 g of the carrier

9. The hybrid supported metallocene catalyst according to claim 2, wherein the co-catalyst comprises a compound represented by the following Chemical Formula 4:
[Chemical Formula 4] -[Al(R¹⁰)-O]ₐ-
in Chemical Formula 4, R¹⁰ may be the same or different, and are independently a halogen, or a C1-20 hydrocarbyl unsubstituted or substituted by a halogen, and a is an integer of 2 or more.

10. The hybrid supported metallocene catalyst according to claim 1, wherein the carrier contains a hydroxyl group and a siloxane group on the surface.

11. The hybrid supported metallocene catalyst according to claim 1, wherein the carrier comprises at least one selected from the group consisting of silica, silica-alumina, and silica-magnesia.

12. A method for preparing a hybrid supported metallocene catalyst, comprising:
contacting a co-catalyst with a carrier;
supporting a phenoxyimine-based metal compound represented by the following Chemical Formula 1 on the carrier;
supporting a first metallocene compound represented by the following Chemical Formula 2 on the carrier; and
supporting a second metallocene compound represented by the following Chemical Formula 3 on the carrier: 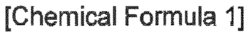 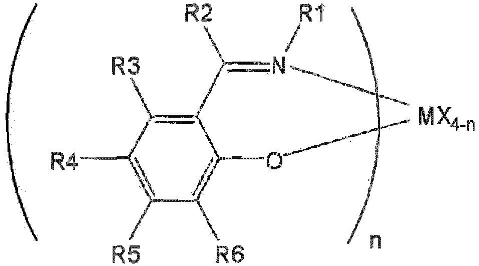 in Chemical Formula 1,
M is Group IV transition metal;
R1, R2, R3, R4, R5, and R6 are independently or simultaneously a hydrogen atom, a halogen group, a C1-20 alkyl group, a C3-20 cycloalkyl group, a C1-20 alkylsilyl group, a C1-20 alkoxy group, a C6-40 aryl group, a C7-40 arylalkyl group, a C7-40 alkylaryl group, a C6-40 arylsilyl group, a C7-40 arylalkylsilyl group, a C6-40 haloaryl group, or a C6-40 aryloxy group;
X is independently or simultaneously a hydrogen atom, a halogen group, a hydroxyl group, a C1-20 alkyl group, a C3-20 cycloalkyl group, a C1-20 alkylsilyl group, a C2-20 alkenyl group, a C1-20 alkoxy group, a C2-20 alkenyloxy group, a C1-20 thioalkoxy group, an amide group, an alcohol amine group, a carboxyl group, a sulfonyl group, a C6-40 aryl group, a C7-40 alkylaryl group, a C7-40 arylalkyl group, a C6-40 arylsilyl group, a C6-40 haloaryl group, a C6-40 aryloxy group, a C7-40 arylalkoxy group, a C6-40 thioaryl group, a C6-40 arylamide group, or a C7-40 arylalkylamide group; and
n is an integer of from 1 to 3, 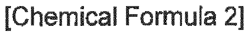 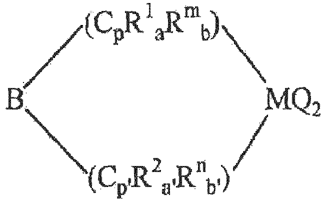
in Chemical Formula 2,
Cp and Cp' are the same or different, and are independently selected from the group consisting of a cyclopentadienyl, indenyl, 4,5,6,7-tetrahydro-1-indenyl, and fluorenyl radical;
R^{m} and Rⁿ are the same or different, and are independently a hydrogen radical, or a C1-20 alkyl, cycloalkyl, aryl, alkenyl, alkylaryl, arylalkyl, arylalkenyl, or alkylsilyl radical;
R¹ and R² are the same or different, and are independently hydrogen or a C1-6 hydrocarbyl radical;
a, a', b, and b' are the same or different, and are independently an integer of from 1 to 4;
the R¹ and R^{m}, or R² and Rⁿ, may be linked to each other to form an aliphatic ring or an aromatic ring;
M is a Group IVB, V5B, or VIB transition metal;
Q is a halogen radical, a C1-20 alkyl radical, an alkenyl radical, an aryl radical, an alkylaryl radical, an arylalkyl radical, or a C1-20 alkylidene radical; and
B is selected from the group consisting of a C1-4 alkylene, a C1-4 alkyl silicone or germanium, a C1-4 alkyl phosphine or amine, a C6-30 arylene group, a C6-30 arylalkylene group, and a C6-30 alkylarylene group,
[Chemical Formula 3] (R^{a})ₚ(R^{b})M'Q₃₋ₚ
in Chemical Formula 3,
p is 0 or 1;
M' is a Group IV transition metal;
R^{a} and R^{b} are the same or different, and are independently a cyclopentadienyl ligand substituted by hydrogen, a C1-20 alkyl, a C2-20 alkoxyalkyl, a C3-20 cycloalkyl, a C6-40 aryl, a C2-20 alkenyl, a C7-40 alkylaryl, a C7-40 arylalkyl, a C8-40 arylalkenyl, and a C1-20 hydrocarbyl; and
Q is a halogen radical.

13. The method for preparing a hybrid supported metallocene catalyst according to claim 12, wherein the supported amount of the phenoxyimine based metal compound is 0.05 wt% to 15 wt% based on 1 g of the carrier.

14. The method for preparing a hybrid supported metallocene catalyst according to claim 12, wherein a hydrogen radical in R^{m}, Rⁿ, and B of Chemical Formula 2 is substituted by the following Chemical Formula 2-1, Chemical Formula 2-2, or Chemical Formula 2-3: 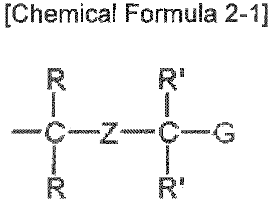 in Chemical Formula 2-1,
Z is an oxygen atom or a sulfur atom;
R and R' are the same or different, and are independently a hydrogen radical, or a C1-20 alkyl, cycloalkyl, aryl, alkenyl, alkylaryl, arylalky, or arylalkenyl radical, and two of R' may be linked to each other to form a ring;
G is a C1-20 alkoxy, aryloxy, alkylthio, arylthio, phenyl, or substituted phenyl, and may be linked with R' to form a ring;
if Z is a sulfur atom, G is necessarily an alkoxy or aryloxy; and
if G is an alkylthio, arylthio, phenyl, or substituted phenyl, Z is necessarily an oxygen atom, 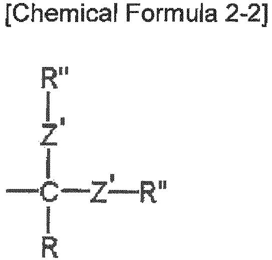
in Chemical Formula 2-2,
Z' is an oxygen atom or a sulfur atom, and at least one of Z' is an oxygen atom;
R and R" are the same or different, and are independently a hydrogen radical, or a C1-20 alkyl, cycloalkyl, aryl, alkenyl, alkylaryl, arylalkyl, or arylalkenyl radical; and
R and R" or two of R" may be linked with each other to form a ring, 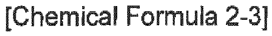 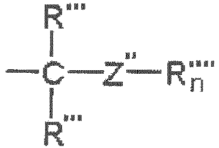
in Chemical Formula 2-3,
Z" is an oxygen, sulfur, nitrogen, phosphorus, or arsenic atom;
R"' are the same or different, and are independently a hydrogen radical, or a C1-40 alkyl, cycloalkyl, aryl, alkenyl, alkylaryl, arylalkyl, or arylalkenyl radical;
R"" is a hydrogen radical, or a C1-40 alkyl, aryl, alkenyl, alkylaryl, alkylsilyl, arylsilyl, phenyl, or substituted phenyl; and
n is 1 or 2, and if Z" is oxygen or sulfur, n is 1, and if Z" is nitrogen, phosphorus, or arsenic, n is 2.

15. The method for preparing a hybrid supported metallocene catalyst according to claim 12, wherein the supported amount of the first metallocene compound is 0.05 wt% to 15 wt% based on 1 g of the carrier.

16. The method for preparing a hybrid supported metallocene catalyst according to claim 12, wherein the supported amount of the second metallocene compound is 0.02 wt% to 15 wt% based on 1 g of the carrier

17. The method for preparing a hybrid supported metallocene catalyst according to claim 12, wherein the co-catalyst comprises a compound represented by the following Chemical Formula 4:
[Chemical Formula 4] -[Al(R¹⁰)-O]ₐ-
in Chemical Formula 4, R¹⁰ may be the same or different, and are independently a halogen, or a C1-20 hydrocarbyl unsubstituted or substituted by a halogen, and a is an integer of 2 or more.

## Patentansprüche

1. Geträgerter Hybridenmetallocenkatalysator, umfassend einen Katalysatorvorläufer, umfassend eine Phenoxyimin-basierte Metallverbindung, dargestellt durch die folgende chemische Formel 1, eine erste Metallocenverbindung, dargestellt durch die folgende chemische Formel 2, und eine zweite Metallocenverbindung, dargestellt durch die folgende chemische Formel 3; und einen Träger für den Katalysatorvorläufer: 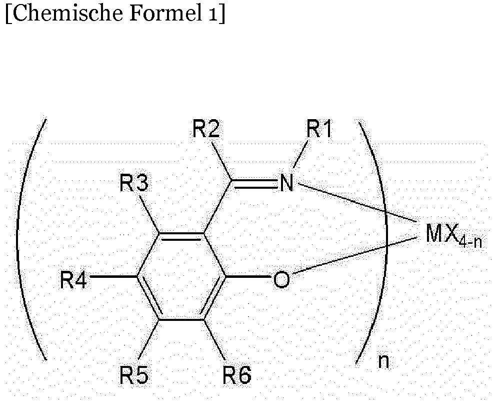 in der chemischen Formel 1
ist M ein Übergangsmetall der Gruppe IV;
sind R1, R2, R3, R4, R5 und R6 unabhängig oder gleichzeitig ein Wasserstoffatom, eine Halogengruppe, eine C1-20 Alkylgruppe, eine C3-20 Cycloalkylgruppe, eine C1-20 Alkylsilylgruppe, eine C1-20 Alkoxygruppe, eine C6-40 Arylgruppe, eine C7-40 Arylalkygruppe, eine C7-40 Alkylarylgruppe, eine C6-40 Arylsilylgruppe, eine C7-40 Arylalkylsilylgruppe, eine C6-40 Haloarylgruppe oder eine C6-40 Aryloxygruppe;
ist X unabhängig oder gleichzeitig ein Wasserstoffatom, eine Halogengruppe, eine Hydroxylgruppe, eine C1-20 Alkygruppe, eine C3-20 Cycloalkylgruppe, eine C1-20 Alkylsilylgruppe, eine C2-20 Alkenylgruppe, eine C1-20 Alkoxygruppe, eine C2-20 Alkenyloxygruppe, eine C1-20 Thioalkoxygruppe, eine Amidgruppe, eine Alkoholamingruppe, eine Carboxylgruppe, eine Sulfonylgruppe, eine C6-40 Arylgruppe, eine C7-40 Alkylarylgruppe, eine C7-40 Arylalkylgruppe, eine C6-40 Arylsilylgruppe, eine C6-40 Haloarylgruppe, eine C6-40 Aryloxygruppe, eine C7-40 Arylalkoxygruppe, eine C6-40 Thioarylgruppe, eine C6-40 Arylamidgruppe oder eine C7-40 Arylalkylamidgruppe; und
ist n eine ganze Zahl von 1 bis 3, 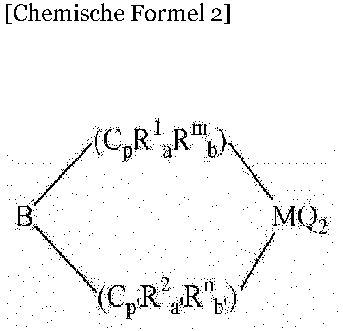
in der chemischen Formel 2
sind Cp und Cp' gleich oder unterschiedlich und sind unabhängig ausgewählt aus der Gruppe, bestehend aus Cyclopentadienyl, Indenyl, 4,5,6,7-Tetrahydro-1-indenyl und Fluorenylradikal;
sind R^{m} und Rⁿ gleich oder unterschiedlich und sind unabhängig ein Wasserstoffradikal oder ein C1-20 Alkyl, Cycloalkyl, Aryl, Alkenyl, Alkylaryl, Arylalkyl, Arylalkenyl oder Alkylsilylradikal;
sind R¹ und R² gleich oder unterschiedlich und sind unabhängig Wasserstoff oder ein C1-6 Hydrocarbylradikal;
sind a, a', b und b' gleich oder unterschiedlich und sind unabhängig eine ganze Zahl von 1 bis 4;
können R¹ und R^{m} oder R² und Rⁿ miteinander verbunden sein, um einen aliphatischen Ring oder einen aromatischen Ring zu bilden;
ist M ein Übergangsmetall der Gruppe IVB, V5B oder VIB;
ist Q ein Halogenradikal, ein C1-20 Alkylradikal, ein Alkenylradikal, ein Arylradikal, ein Alkylarylradikal, ein Arylalkylradikal oder ein C1-20 Alkylidenradikal; und
ist B ausgewählt aus der Gruppe, bestehend aus einem C1-4 Alkylen, einem C1-4 Alkylsilizium oder Germanium; C1-4 Alkylphosphin oder Amin; einer C6-30 Arylengruppe; einer C6-30 Arylalkylengruppe; und einer C6-30 Alkylarylengruppe,
[Chemische Formel 3] (R^{a})ₚ(R^{b})M'Q₃₋ₚ
in der chemischen Formel 3
ist p 0 oder 1;
ist M' ein Übergangsmetall der Gruppe IV;
sind R^{a} und R^{b} gleich oder unterschiedlich und sind unabhängig ein Cyclopentadienylligand, der mit Wasserstoff, einem C1-20 Alkyl, einem C2-20 Alkoxyalkyl, einem C3-20 Cycloalkyl, einem C6-40 Aryl, einem C2-20 Alkenyl, einem C7-40 Alkylaryl, einem C7-40 Arylalkyl, einem C8-40 Arylalkenyl und einem C1-20 Hydrocarbyl substituiert sein kann; und
ist Q ein Halogenradikal.

2. Geträgerter Hybridenmetallocenkatalysator nach Anspruch 1, der ferner einen Cokatalysator umfasst.

3. Geträgerter Hybridenmetallocenkatalysator nach Anspruch 1, wobei in der chemischen Formel 1 M Titan, Zirconium oder Hafnium ist und X eine Halogengruppe ist.

4. Geträgerter Hybridenmetallocenkatalysator nach Anspruch 1, wobei die geträgerte Menge an Phenoxyimin-basierter Metallverbindung von 0,05 Gew.-% bis 15 Gew.-%, bezogen auf 1 g des Trägers, ist.

5. Geträgerter Hybridenmetallocenkatalysator nach Anspruch 1, wobei ein Wasserstoffradikal in R^{m}, Rⁿ und B der chemischen Formel 2 durch die folgende chemische Formel 2-1, die chemische Formel 2-2 oder die chemische Formel 2-3 substituiert ist: 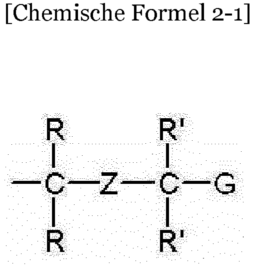 in der chemischen Formel 2-1
ist Z ein Sauerstoffatom oder ein Schwefelatom;
sind R und R' gleich oder unterschiedlich und sind unabhängig ein Wasserstoffradikal oder ein C1-20 Alkyl, Cycloalkyl, Aryl, Alkenyl, Alkylaryl, Arylalkyl oder Arylalkenylradikal und zwei der R' können miteinander verbunden sein, um einen Ring zu bilden;
ist G ein C1-20 Alkoxy, Aryloxy, Alkylthio, Arylthio, Phenyl oder substituiertes Phenyl und kann mit dem R' verbunden sein, um einen Ring zu bilden;
ist, wenn Z ein Schwefelatom ist, G notwendigerweise ein Alkoxy oder Aryloxy; und ist, wenn G Alkylthio, Arylthio, Phenyl oder substituiertes Phenyl ist, Z notwendigerweise ein Sauerstoffatom, 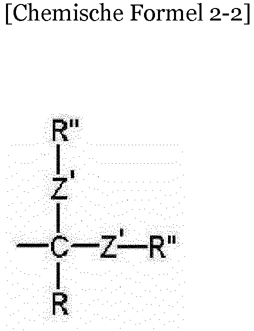
in der chemischen Formel 2-2
ist Z' ein Sauerstoffatom oder ein Schwefelatom und zumindest eines der Z' ist ein Sauerstoffatom;
R und R" sind gleich oder unterschiedlich und sind unabhängig ein Wasserstoffradikal oder ein C1-20 Alkyl, Cycloalkyl, Aryl, Alkenyl, Alkylaryl, Arylalkyl oder Arylalkenylradikal; und
können R und R" oder zwei der R" miteinander verbunden sein, um einen Ring zu bilden, 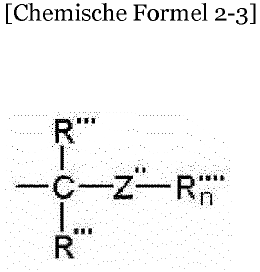
in der chemischen Formel 2-3
ist Z" ein Sauerstoff, Schwefel, Stickstoff, Phosphor oder Arsenatom;
sind R'" gleich oder unterschiedlich und unabhängig ein Wasserstoffradikal oder ein C1-40 Alkyl, Cycloalkyl, Aryl, Alkenyl, Alkylaryl, Arylalkyl oder Arylalkenylradikal;
ist R"" ein Wasserstoffradikal oder ein C1-40 Alkyl, Aryl, Alkenyl, Alkylaryl, Alkylsilyl, Arylsilyl, Phenyl oder substituiertes Phenyl; und
ist n 1 oder 2 und, wenn Z" Sauerstoff oder Schwefel ist, ist n 1, und, wenn Z" Stickstoff, Phosphor oder Arsen ist, ist n 2.

6. Geträgerter Hybridenmetallocenkatalysator nach Anspruch 1, wobei die erste Metallocenverbindung, die dargestellt ist durch die chemische Formel 2, [A-O-(CH₂)q-C₅H₄]C(CH₃)₂[C₁₃H₈]ZrCl₂, [A-O-(CH₂)q-C_{S}H₄]Si(CH₃)₂[Cₗ₃Hs]ZrCl₂, [C₅H₅]C(CH₃)(A-O-(CH₂)q)[C₁₃H₈]ZrCl₂ oder [C₅H₅]Si(CH₃)(A-O-(CH₂)q)[C₁₃H₈]ZrCl₂, ist,
vorausgesetzt, dass q eine ganze Zahl von 4 - 8 ist und A ausgewählt ist aus der Gruppe, bestehend aus Methoxymethyl, t-Butoxymethyl, Tetrahydropyranyl, Tetrahydrofuranyl, 1-Ethoxyethyl, 1-Methyl-a-methoxyethyl und t-Butyl.

7. Geträgerter Hybridenmetallocenkatalysator nach Anspruch 1, wobei die geträgerte Menge des ersten Metallocenkatalysators 0,05 Gew.-% bis 15 Gew.-%, bezogen auf 1 g des Trägers, ist.

8. Geträgerter Hybridenmetallocenkatalysator nach Anspruch 1, wobei die geträgerte Menge der zweiten Metallocenverbindung 0,02 Gew.-% bis 15 Gew.-%, bezogen auf 1 g des Trägers, ist.

9. Geträgerter Hybridenmetallocenkatalysator nach Anspruch 2, wobei der Cokatalysator eine Verbindung umfasst, die dargestellt ist durch die folgende chemische Formel 4:
[Chemische Formel 4] -[Al(R¹⁰)-O]ₐ
in der chemischen Formel 4 können R¹⁰ gleich oder unterschiedlich sein und sind unabhängig ein Halogen oder ein C1-20 Hydrocarbyl, unsubstituiert oder substituiert mit einem Halogen, und ist a eine ganze Zahl von 2 oder mehr.

10. Geträgerter Hybridenmetallocenkatalysator nach Anspruch 1, wobei der Träger eine Hydroxylgruppe und eine Siloxangruppe auf der Oberfläche umfasst.

11. Geträgerter Hybridenmetallocenkatalysator nach Anspruch 1, wobei der Träger zumindest eines umfasst, das ausgewählt ist aus der Gruppe, bestehend aus Siliziumdioxid, Siliziumdioxid-Aluminiumoxid und Siliziumdioxid-Magnesiumoxid.

12. Verfahren zur Herstellung eines geträgerten Hybridenmetallocenkatalysators, umfassend:
Inkontaktbringen eines Cokatalysators mit einem Träger;
Trägern einer Phenoxyimin-basierten Metallverbindung, die dargestellt wird durch die folgende chemische Formel, auf den Träger;
Trägern einer ersten Metallocenverbindung, die dargestellt wird durch die folgende chemische Formel 2, auf den Träger; und
Trägern einer zweiten Metallocenverbindung, die dargestellt ist durch die folgende chemische Formel 3, auf den Träger; 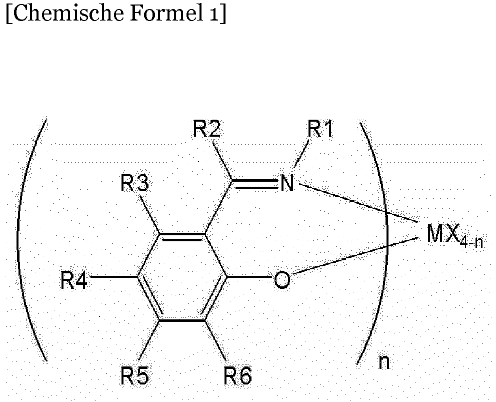
in der chemischen Formel 1
ist M ein Übergangsmetall der Gruppe IV;
sind R1, R2, R3, R4, R5 und R6 unabhängig oder gleichzeitig ein Wasserstoffatom, eine Halogengruppe, eine C1-20 Alkylgruppe, eine C3-20 Cycloalkylgruppe, eine C1-20 Alkylsilylgruppe, eine C1-20 Alkoxygruppe, eine C6-40 Arylgruppe, eine C7-40 Arylalkygruppe, eine C7-40 Alkylarylgruppe, eine C6-40 Arylsilylgruppe, eine C7-40 Arylalkylsilylgruppe, eine C6-40 Haloarylgruppe oder eine C6-40 Aryloxygruppe;
ist X unabhängig oder gleichzeitig ein Wasserstoffatom, eine Halogengruppe, eine Hydroxylgruppe, eine C1-20 Alkygruppe, eine C3-20 Cycloalkylgruppe, eine C1-20 Alkylsilylgruppe, eine C2-20 Alkenylgruppe, eine C1-20 Alkoxygruppe, eine C2-20 Alkenyloxygruppe, eine C1-20 Thioalkoxygruppe, eine Amidgruppe, eine Alkoholamingruppe, eine Carboxylgruppe, eine Sulfonylgruppe, eine C6-40 Arylgruppe, eine C7-40 Alkylarylgruppe, eine C7-40 Arylalkylgruppe, eine C6-40 Arylsilylgruppe, eine C6-40 Haloarylgruppe, eine C6-40 Aryloxygruppe, eine C7-40 Arylalkoxygruppe, eine C6-40 Thioarylgruppe, eine C6-40 Arylamidgruppe oder eine C7-40 Arylalkylamidgruppe; und
ist n eine ganze Zahl von 1 bis 3, 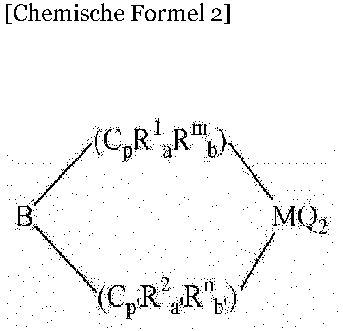
in der chemischen Formel 2
sind Cp und Cp' gleich oder unterschiedlich und sind unabhängig ausgewählt aus der Gruppe, bestehend aus Cyclopentadienyl, Indenyl, 4,5,6,7-Tetrahydro-1-indenyl und Fluorenylradikal;
sind R^{m} und Rⁿ gleich oder unterschiedlich und sind unabhängig ein Wasserstoffradikal oder ein C1-20 Alkyl, Cycloalkyl, Aryl, Alkenyl, Alkylaryl, Arylalkyl, Arylalkenyl oder Alkylsilylradikal;
sind R¹ und R² gleich oder unterschiedlich und sind unabhängig Wasserstoff oder ein C1-6 Hydrocarbylradikal;
sind a, a', b und b' gleich oder unterschiedlich und sind unabhängig eine ganze Zahl von 1 bis 4;
können R¹ und R^{m} oder R² und Rⁿ miteinander verbunden sein, um einen aliphatischen Ring oder einen aromatischen Ring zu bilden;
ist M ein Übergangsmetall der Gruppe IVB, V5B oder VIB;
ist Q ein Halogenradikal, ein C1-20 Alkylradikal, ein Alkenylradikal, ein Arylradikal, ein Alkylarylradikal, ein Arylalkylradikal oder ein C1-20 Alkylidenradikal; und
ist B ausgewählt aus der Gruppe, bestehend aus einem C1-4 Alkylen, einem C1-4 Alkylsilizium oder Germanium; C1-4 Alkylphosphin oder Amin; einer C6-30 Arylengruppe; einer C6-30 Arylalkylengruppe; und einer C6-30 Alkylarylengruppe,
[Chemische Formel 3] (R^{a})ₚ(R^{b})M'Q₃₋ₚ
in der chemischen Formel 3
ist p 0 oder 1;
ist M' ein Übergangsmetall der Gruppe IV;
sind R^{a} und R^{b} gleich oder unterschiedlich und sind unabhängig ein Cyclopentadienylligand, der mit Wasserstoff, einem C1-20 Alkyl, einem C2-20 Alkoxyalkyl, einem C3-20 Cycloalkyl, einem C6-40 Aryl, einem C2-20 Alkenyl, einem C7-40 Alkylaryl, einem C7-40 Arylalkyl, einem C8-40 Arylalkenyl und einem C1-20 Hydrocarbyl substituiert sein kann; und
ist Q ein Halogenradikal.

13. Verfahren zur Herstellung eines geträgerten Hybridenmetallocenkatalysators nach Anspruch 12, wobei die geträgerte Menge der Phenoxyimin-basierten Metallverbindung von 0,05 Gew.-% bis 15 Gew.-%, bezogen auf 1 g des Trägers, ist.

14. Verfahren zur Herstellung eines hybridgeträgerten Metallocenkatalysators nach Anspruch 12, wobei ein Wasserstoffradikal in R^{m}, Rⁿ und B der chemischen Formel 2 durch die folgende chemische Formel 2-1, die chemische Formel 2-2 oder die chemische Formel 2-3 substituiert ist: 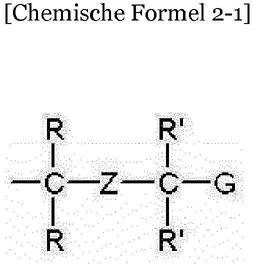 in der chemischen Formel 2-1
ist Z ein Sauerstoffatom oder ein Schwefelatom;
sind R und R' gleich oder unterschiedlich und sind unabhängig ein Wasserstoffradikal oder ein C1-20 Alkyl, Cycloalkyl, Aryl, Alkenyl, Alkylaryl, Arylalkyl oder Arylalkenylradikal und zwei der R' können miteinander verbunden sein, um einen Ring zu bilden;
ist G ein C1-20 Alkoxy, Aryloxy, Alkylthio, Arylthio, Phenyl oder substituiertes Phenyl und kann mit dem R' verbunden sein, um einen Ring zu bilden;
ist, wenn Z ein Schwefelatom ist, G notwendigerweise ein Alkoxy oder Aryloxy; und ist, wenn G Alkylthio, Arylthio, Phenyl oder substituiertes Phenyl ist, Z notwendigerweise ein Sauerstoffatom, 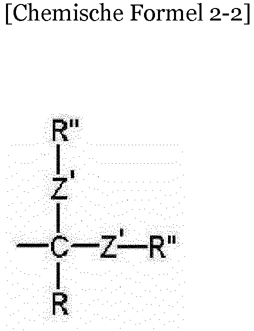
in der chemischen Formel 2-2
ist Z' ein Sauerstoffatom oder ein Schwefelatom und zumindest eines der Z' ist ein Sauerstoffatom;
R und R" sind gleich oder unterschiedlich und sind unabhängig ein Wasserstoffradikal oder ein C1-20 Alkyl, Cycloalkyl, Aryl, Alkenyl, Alkylaryl, Arylalkyl oder Arylalkenylradikal; und
können R und R" oder zwei der R" miteinander verbunden sein, um einen Ring zu bilden, 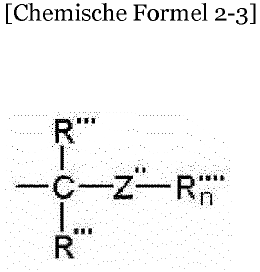
in der chemischen Formel 2-3
ist Z" ein Sauerstoff, Schwefel, Stickstoff, Phosphor oder Arsenatom;
sind R'" gleich oder unterschiedlich und unabhängig ein Wasserstoffradikal oder ein C1-40 Alkyl, Cycloalkyl, Aryl, Alkenyl, Alkylaryl, Arylalkyl oder Arylalkenylradikal;
ist R"" ein Wasserstoffradikal oder ein C1-40 Alkyl, Aryl, Alkenyl, Alkylaryl, Alkylsilyl, Arylsilyl, Phenyl oder substituiertes Phenyl; und
ist n 1 oder 2 und, wenn Z" Sauerstoff oder Schwefel ist, ist n 1, und, wenn Z" Stickstoff, Phosphor oder Arsen ist, ist n 2.

15. Verfahren zur Herstellung eines hybridgeträgerten Metallocenkatalysators nach Anspruch 12, wobei die geträgerte Menge der ersten Metallocenverbindung von 0,05 Gew.% bis 15 Gew.-%, bezogen auf 1 g des Trägers, ist.

16. Verfahren zur Herstellung eines hybridgeträgerten Metallocenkatalysators nach Anspruch 12, wobei die geträgerte Menge der zweiten Metallocenverbindung von 0,02 Gew.-% bis 15 Gew.-%, bezogen auf 1 g des Trägers, ist.

17. Verfahren zur Herstellung eines hybridgeträgerten Metallocenkatalysators nach Anspruch 12, wobei der Cokatalysator eine Verbindung, die dargestellt ist durch die folgende chemische Formel 4, umfasst:
[Chemische Formel 4] -[Al(R¹⁰)-O]ₐ-
in der chemischen Formel 4 können R¹⁰ gleich oder unterschiedlich sein und sind unabhängig ein Halogen oder eine C1-20 Hydrocarbylgruppe, unsubstituiert oder substituiert mit einem Halogen, und a ist eine ganze Zahl von 2 oder mehr.

## Revendications

1. Catalyseur métallocène hybride sur support comprenant un précurseur de catalyseur comprenant un composé de métal à base de phénoxyimine représenté par la formule chimique 1 suivante, un premier composé méthalocène représenté par la formule chimique 2 suivante et un second composé métallocène représenté par la formule chimique 3 suivante ; et un support pour le précurseur de catalyseur : 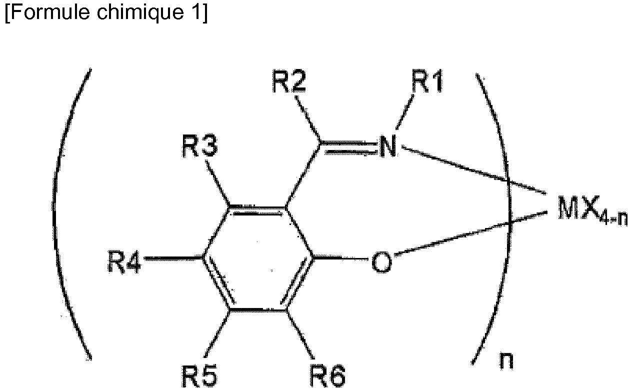 dans la formule chimique 1,
M représente un métal de transition du groupe IV :
R1, R2, R3, R4, R5 et R6 représentent indépendamment ou simultanément un atome d'hydrogène, un groupe halogène, un groupe alkyle en C1 à C20, un groupe cycloalkyle en C3 à C20, un groupe alkylsilyle en C1 à C20, un groupe alcoxy en C1 à C20, un groupe aryle en C6 à C40, un groupe arylalkyle en C7 à C40, un groupe alkylaryle en C7 à C40, un groupe arylsilyle en C6 à C40, un groupe arylalkylsilyle en C7 à C40, un groupe haloaryle en C6 à C40 ou un groupe aryloxy en C6 à C40 ;
X représente indépendamment ou simultanément un atome d'hydrogène, un groupe halogène, un groupe hydroxyle, un groupe alkyle en C1 à C20, un groupe cycloalkyle en C3 à C20, un groupe alkylsilyle en C1 à C20, un groupe alcényle en C2 à C20, un groupe alcoxy en C1 à C20, un groupe alcényloxy en C2 à C20, un groupe thioalcoxy en C1 à C20, un groupe amide, un groupe amino-alcool, un groupe carboxyle, un groupe sulfonyle, un groupe aryle en C6 à C40, un groupe alkylaryle en C7 à C40, un groupe arylalkyle en C7 à C40, un groupe arylsilyle en C6 à C40, un groupe haloaryle en C6 à C40, un groupe aryloxy en C6 à C40, un groupe arylalcoxy en C7 à C40, un groupe trioaryle en C6 à C40, un groupe arylamide en C6 à C40 ou un groupe arylalkylamide en C7 à C40 ; et
N désigne un nombre entier valant de 1 à 3, 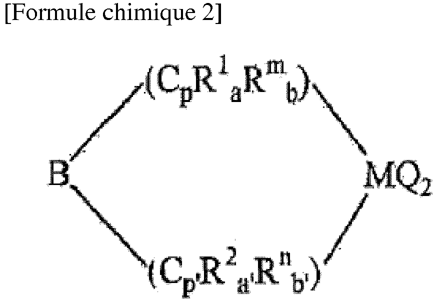
dans la formule chimique 2,
Cp et Cp' sont identiques ou différents, et sont indépendamment sélectionnés dans le groupe constitué de cyclopentadiényle, d'indényle, de 4,5,6,7-tétrahydro-1-indényle et d'un radical fluorényle ;
R^{m} et Rⁿ sont identiques ou différents et représentent indépendamment un radical hydrogène, ou un alkyle en C1 à C20, un cycloalkyle, un aryle, un alcényle, un alkylaryle, un arylalkyle, un arylalcényle ou un radical alkylsilyle ;
R¹ et R² sont identiques ou différents et représentent indépendamment l'hydrogène ou un radical hydrocarbyle en C1 à C6 ;
a, a', b et b' sont identiques ou différents et représentent indépendamment un nombre entier allant de 1 à 4 ;
R¹ et R^{m}, ou R² et Rⁿ, peuvent être liés l'un à l'autre de sorte à former un cycle aliphatique ou un cycle aromatique ;
M représente un métal de transition du groupe IVB, V5B ou VIB ;
Q représente un radical halogène, un radical alkyle en C1 à C20, un radical alcényle, un radical aryle, un radical alkylaryle, un radical arylalkyle ou un radical alkylidène en C1 à C20 ; et
B est sélectionné dans le groupe constitué d'un alkylène en C1 à C4, d'un silicone ou d'un germanium d'alkyle en C1 à C4, d'une phosphine ou d'une amine d'alkyle en C1 à C4 ; d'un groupe arylène en C6 à C30 ; d'un groupe arylalkylène en C6 à C30 ; et d'un groupe alkylarylène en C6 à C30,
[Formule chimique 3] (R^{a})ₚ(R^{b})M'Q₃₋ₚ
dans la formule chimique 3,
p vaut 0 ou 1 ;
M' représente un métal de transition du groupe IV ;
R^{a} et R^{b} sont identiques ou différents, et représentent indépendamment un ligand de cyclopentadiényle substitué par l'hydrogène, un alkyle en C1 à C20, un alcoxyalkyle en C2 à C20, un cycloalkyle en C3 à C20, un aryle en C6 à C40, un alcényle en C2 à C20, un alkylaryle en C7 à C40, un arylalkyle en C7 à C40, un arylalcényle en C8 à C40 et un hydrocarbyle en C1 à C20 ; et
Q représente un radical halogène,.

2. Catalyseur métallocène hybride sur support sur support hybride selon la revendication 1, comprenant en outre un cocatalyseur.

3. Catalyseur métallocène hybride sur support selon la revendication 1, dans lequel dans la formule chimique 1, M représente le titane, le zirconium ou le hafnium, et X représente un groupe halogène.

4. Catalyseur métallocène hybride sur support selon la revendication 1, dans lequel la quantité servant de support du composé de métal à base de phénoxyimine est de 0,05 % en poids à 15 % en poids par rapport à 1 g du support.

5. Catalyseur métallocène hybride sur support selon la revendication 1, dans lequel un radical hydrogène dans R^{m}, Rⁿ et B de la formule chimique 2 est substitué par la formule chimique 2-1, la formule chimique 2-2 ou la formule chimique 2-3 suivante : 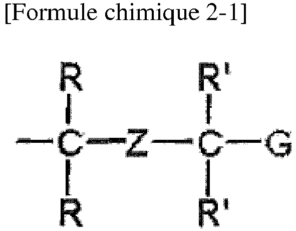 dans la formule chimique 2-1,
Z représente un atome d'oxygène ou un atome de soufre ;
R et R' sont identiques ou différents et représentent indépendamment un radical hydrogène, ou un alkyle en C1 à C20, un cycloalkyle, un aryle, un alcényle, un alkylaryle, un arylalkyle ou un radical arylalcényle, et deux des R' peuvent être liés l'un à l'autre pour former un cycle ;
G représente un alcoxy en C1 à C20, un aryloxy, un alkylthio, un arylthio, un phényle ou un phényle substitué, et peut être lié à R' pour former un cycle ;
si Z représente un atome de soufre, G est nécessairement un alcoxy ou un aryloxy ; et
si G représente alkylthio, arylthio, phényle ou phényle substitué, Z représente nécessairement un atome d'oxygène, 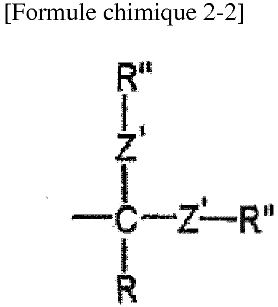
dans la formule chimique 2-2,
Z' représente un atome d'oxygène ou un atome de soufre, et au moins l'un de Z' représente un atome d'oxygène ;
R et R" sont identiques ou différents, et représentent indépendamment un radical hydrogène ou un alkyle en C1 à C20, un cycloalkyle, un aryle, un alcényle, un alkylaryle, un arylalkyle ou un radical arylalcényle ; et
R et R" ou deux des R" peuvent être liés l'un à l'autre pour former un cycle, 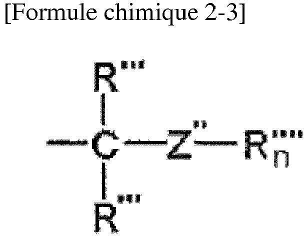
dans la formule chimique 2-3
Z" représente un oxygène, le soufre, l'azote, le phosphore ou un atome d'arsenic ;
R" sont identiques ou différents et représentent indépendamment un radical hydrogène ou un alkyle en C1 à C40, un cycloalkyle, un aryle, un alcényle, un alkylaryle, un arylalkyle ou un radical arylalcényle ;
R"" représente un radical hydrogène ou un alkyle en C1 à C40, un aryle, un alcényle, un alkylaryle, un alkylsilyle, un arylsilyle, un phényle ou un phényle substitué : et
N vaut 1 ou 2 et si Z" représente l'oxygène ou le soufre, n vaut 1, et si Z" représente l'azote, le phosphore ou l'arsenic, n vaut 2.

6. Catalyseur métallocène hybride sur support selon la revendication 1, dans lequel le premier composé métallocène représenté par la formule 2 est [A-O-(CH₂)q-C₅H₄]C(CH₃)₂[C₁₃H₈]ZrCl₂, [A-O-(CH₂)q-C₅H₄]Si(CH₃)₂[C₁₃H₈]ZrCl₂, [C₅H₅]C(CH₃)(A-O-(CH₂)q[C₁₃H₈]ZrCl₂ ou [C₅H₅]Si(CH₃)(A-O-(CH₂)q)[C₁₃H₈]ZrCl₂,
à condition que q soit un nombre entier compris valant de 4 à 8 et que A soit sélectionné dans le groupe constitué de méthoxyméthyle, t-butoxyméthyle, tétrahydropyranyle, tétrahydrofuranyle, 1-ethoxyéthyle, 1-méthyl-a-méthoxyéthyle et t-butyle.

7. Catalyseur méthalocène hybride sur support selon la revendication 1, dans lequel la quantité servant de support du premier composé métallocène est de 0,05 % en poids à 15 % en poids par rapport à 1 g du support.

8. Catalyseur méthalocène hybride sur support selon la revendication 1, dans lequel la quantité servant de support du second composé métallocène est de 0,02 % en poids à 15 % en poids par rapport à 1 g du support.

9. Catalyseur méthalocène hybride sur support selon la revendication 2, dans lequel le cocatalyseur comprend un composé représenté par la formule chimique 4 suivante :
[Formule chimique 4] -[AI(R¹⁰)-O]ₐ-
dans la formule chimique 4, les R¹⁰ peuvent être identiques ou différents et représentent indépendamment un halogène ou un hydrocarbyle en C1 à C20 non substitué ou substitué par un halogène et a désigne un nombre entier valant 2 ou supérieur.

10. Catalyseur méthalocène hybride sur support selon la revendication 1, dans lequel le support contient un groupe hydroxyle et un groupe siloxane sur la surface.

11. Catalyseur métallocène hybride sur support selon la revendication 1, dans lequel le support comprend au moins un élément sélectionné dans le groupe constitué de silice, de silice-alumine et de silice-magnésie.

12. Procédé d'élaboration d'un catalyseur métallocène hybride, comprenant les étapes consistant à :
mettre en contact un cocatalyseur avec un support ;
supporter un composé de métal à base de phonoxyimine représenté par la formule chimique 1 suivante sur le support ;
supporter un premier composé métallocène représenté par la formule chimique 2 suivante sur le support ; et
supporter un second composé métallocène représenté par la formule chimique 3 suivante sur le support : 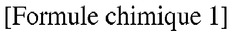 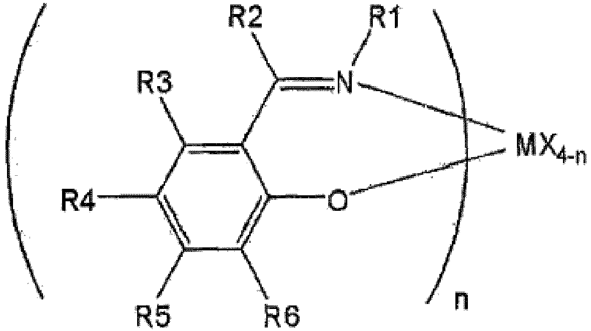 dans la formule chimique 1,
M représente un métal de transition du groupe IV ;
R1, R2, R3, R4, R5 représentent indépendamment ou simultanément un atome d'hydrogène, un groupe halogène, un groupe alkyle en C1 à C20, un groupe cycloalkyle en C3 à C20, un groupe alkylsilyle en C1 à C20, un groupe alcoxy en C1 à C20, un groupe aryle en C6 à C40, un groupe arylalkyle en C7 à C40, un groupe alkylaryle en C7 à C40, un groupe arylsilyle en C6 à C40, un groupe arylalkylsilyle en C7 à C40, un groupe haloaryle en C6 à C40 ou un groupe aryloxy en C6 à C40 ;
X représente indépendamment ou simultanément un atome d'hydrogène, un groupe halogène, un groupe hydroxyle, un groupe alkyle en C1 à C20, un groupe cycloalkyle en C3 à C20, un groupe alkylsilyle en C1 à C20, un groupe alcényle en C2 à C20, un groupe alcoxy en C1 à C20, un groupe alkényloxy en C2 à C20, un groupe thioalcoxy en C1 à C20, un groupe amide, un groupe amino-alcool, un groupe carboxyle, un groupe sulfonyle, un groupe aryle en C6 à C40, un groupe alkylaryle en C7 à C40, un groupe arylalkyle en C7 à C40, un groupe arylsilyle en C6 à C40, un groupe haloaryle en C6 à C40, un groupe aryloxy en C6 à C40, un groupe arylalcoxy en C7 à C40, un groupe thioaryle en C6 à C40, un groupe arylamide en C6 à C40 ou un groupe arylalkylamide en C7 à C40 ; et
n désigne un nombre entier valant de 1 à 3, 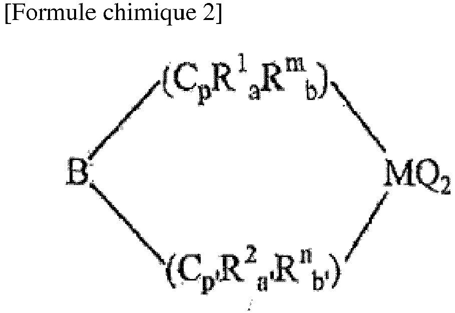
dans la formule chimique 2,
Cp et Cp' sont identiques ou différents, et sont indépendamment sélectionnés dans le groupe constitué d'un cyclopentadiényle, d'un indényle, d'un 4,5,6,7-tétrahydro-1-indényle et d'un radical fluorényle ;
R^{m} et Rⁿ sont identiques ou différents et représentent indépendamment un radical hydrogène, ou un alkyle en C1 à C20, un cycloalkyle, un aryle, un alcényle, un alkylaryle, un arylalkyle, un arylalcényle ou un radical alkylsilyle ;
R¹ et R² sont identiques ou différents, et représentent indépendamment un hydrogène ou un radical hydrocarbyle en C1 à C6 ;
a, a', b et b' sont identiques ou différents, et représentent indépendamment un nombre entier valant de 1 à 4 ;
les R¹ et R^{m}, ou les R² et Rⁿ, peuvent être liés l'un à l'autre pour former un cycle aliphatique ou un cycle aromatique ;
M représente un métal de transition du groupe IVB, V5B ou VIB ;
Q représente un radical halogène, un radical alkyle en C1 à C20, un radical alcényle, un radical aryle, un radical alkylaryle, un radical arylalkyle ou un radical alkylidène en C1 à C20 ; et
B est sélectionné dans le groupe constitué d'un alkylène en C1 à C4, d'un silicone ou germanium d'alkyle en C1 à C4, d'une phosphine ou d'une amine d'alkyle en C1 à C4, d'un groupe arylène en C6 à C30, d'un groupe arylalkylène en C6 à C30 et d'un groupe alkylarylène en C6 à C30,
[Formule chimique 3] (R^{a})ₚ(R^{b})M'Q₃₋ₚ
dans la formule chimique 3,
p vaut 0 ou 1 ;
M' représente un métal de transition du groupe IV ;
R^{a} et R^{b} sont identiques ou différents et représentent indépendamment un ligand de cyclopentadiényle substitué par l'hydrogène, un alkyle en C1 à C20, un alcoxyalkyle en C2 à C20, un cycloalkyle en C3 à 20, un aryle en C6 à C40, un alcényle en C2 à C20, un alkylaryle en C7 à C40, un arylalkyle en C7 à C40, un arylalcényle en C8 à C40 et un hydrocarbyle en C1 à C20 ; et
Q représente un radical halogène.

13. Procédé d'élaboration d'un catalyseur métallocène hybride sur support selon la revendication 12, dans lequel la quantité servant de support du composé de métal à base de phénoxyimine est de 0,05 % en poids à 15 % en poids par rapport à 1 g du support.

14. Procédé d'élaboration d'un catalyseur métallocène hybride sur support selon la revendication 12, dans lequel un radical hydrogène dans R^{m}, Rⁿ et B de la formule chimique 2 est substitué par la formule chimique 2-1, la formule chimique 2-2 ou la formule chimique 2-3 suivante : 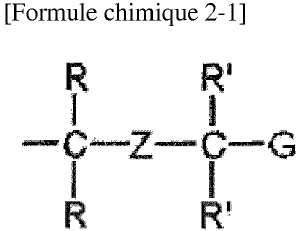 dans la formule chimique 2-1,
Z représente un atome d'oxygène ou un atome de soufre ;
R et R' sont identiques ou différents et représentent indépendamment un radical hydrogène, ou un alkyle en C1 à C20, un cycloalkyle, un aryle, un alcényle, un alkylaryle, un arylalkyle ou un radical arylalcényle, et deux de R' peuvent être liés l'un à l'autre pour former un cycle :
G représente un alcoxy en C1 à C20, un aryloxy, un alkylthio, un arylthio, un phényle ou un phényle substitué, et peut être lié à R' pour former un cycle ;
si Z représente un atome de soufre, G représente nécessairement un alcoxy ou un aryloxy ; et
si G représente un alkylthio, un arylthio, un phényle ou un phényle substitué, Z représente nécessairement un atome d'oxygène. 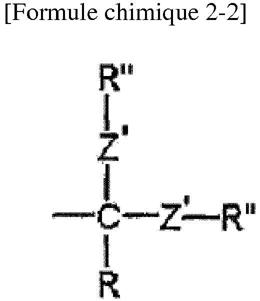
dans la formule chimique 2-2,
Z' représente un atome d'oxygène ou un atome de soufre, et au moins l'un de Z' représente un atome d'oxygène ;
R et R" sont identiques ou différents, et représentent indépendamment un radical hydrogène, ou un alkyle en C1 à C20, un cycloalkyle, un aryle, un alcényle, un alkylaryle, un arylalkyle ou un radical arylalcényle ; et
R et R" ou deux de R" peuvent être liés l'un à l'autre pour former un cycle. 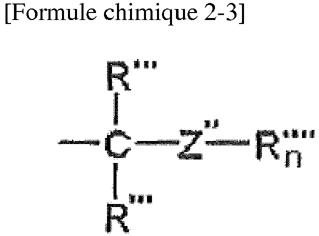
dans la formule chimique 2-3,
Z" représente un oxygène, le soufre, l'azote, le phosphore ou un atome d'arsenic ;
les R'" sont identiques ou différents et représentent indépendamment un radical hydrogène, ou un alkyle en C1 à C40, un cycloalkyle, un aryle, un alcényle, un alkylaryle, un arylalkyle ou un radical arylalcényle ;
R"" représente un radical hydrogène, ou un alkyle en C1 à C40, un aryle, un alcényle, un alkylaryle, un alkylsilyle, un arylsilyle, un phényle ou un phényle substitué ; et
n vaut 1 ou 2, et si Z" représente l'oxygène, n vaut 1, et si Z" représente l'azote, le phosphore ou l'arsenic, n vaut 2.

15. Procédé d'élaboration d'un catalyseur métallocène hybride sur support selon la revendication 12, dans lequel la quantité servant de support du premier composé métallocène est de 0,05 % en poids à 15 % en poids par rapport à 1 g du support.

16. Procédé d'élaboration d'un catalyseur métallocène hybride sur support selon la revendication 12, dans lequel la quantité servant de support du second composé métallocène est de 0,02 % en poids à 15 % en poids par rapport à 1 g du support.

17. Procédé d'élaboration d'un catalyseur métallocène hybride sur support selon la revendication 12, dans lequel le cocatalyseur comprend un composé représenté par la formule chimique 4 suivante :
[Formule chimique 4] -[A1(R¹⁰)-O]ₐ-
dans la formule chimique 4, les R¹⁰ peuvent être identiques ou différents, et représentent indépendamment un halogène, ou un hydrocarbyle en C1 à C20 non substitué ou substitué par un halogène, et n désigne un nombre entier valant 2 ou supérieur.
